# EUROPEAN PATENT SPECIFICATION

(11) **EP 3 917 175 B1**
(45) Date of publication and mention of the grant of the patent: **01.05.2024**
(21) Application number: 19941029.1
(22) Date of filing: 18.12.2019
(51) Int. Cl.: H04W 4/029, H04W 4/40, H04W 64/00, G01C 21/00, H04W 4/021, G01C 21/20, G01C 21/36

(54) **POSITIONING INFORMATION CREATION METHOD, VEHICLE-MOUNTED TERMINAL, SERVER DEVICE, AND POSITIONING SYSTEM**
POSITIONIERUNGSINFORMATIONSERZEUGUNGSVERFAHREN, FAHRZEUGMONTIERTES ENDGERÄT, SERVERVORRICHTUNG UND POSITIONIERUNGSSYSTEM
PROCÉDÉ DE CRÉATION D'INFORMATIONS DE POSITIONNEMENT, TERMINAL EMBARQUÉ, DISPOSITIF SERVEUR ET SYSTÈME DE POSITIONNEMENT

(30) Priority: 15.08.2019 CN 201910757707
(43) Date of publication of application: 01.12.2021
(73) Proprietor: Guangdong Xiaopeng Motors Technology Co., Ltd., Guangzhou, Guangdong 510000 (CN)
(72) Inventor: CHAI, Wennan, Guangzhou, Guangdong 510555 (CN); LIU, Zhongyuan, Guangzhou, Guangdong 510555 (CN); JIANG, Shaofeng, Guangzhou, Guangdong 510555 (CN); LI, Hongjun, Guangzhou, Guangdong 510555 (CN); HUANG, Ya, Guangzhou, Guangdong 510555 (CN); ZHOU, Jian, Guangzhou, Guangdong 510555 (CN)
(74) Representative: DREISS Patentanwälte PartG mbB
(86) International application number: PCT/CN2019/126408
(87) International publication number: WO 2021/027215

(56) References cited:
- WO-A1-2015/048434
- WO-A1-2017/042672
- WO-A2-2013/019900
- CN-A- 104 303 071
- CN-A- 104 303 071
- CN-A- 104 780 605
- CN-A- 105 022 077
- CN-A- 107 087 263
- CN-A- 107 087 263
- CN-A- 110 519 701
- US-A1- 2015 309 180
- WILFINGER ROMAN ET AL: "Indoor position determination using location fingerprinting and vehicle sensor data", 2016 EUROPEAN NAVIGATION CONFERENCE (ENC), IEEE, 30 May 2016 (2016-05-30), pages 1-9, XP032935318, DOI: 10.1109/EURONAV.2016.7530561 [retrieved on 2016-08-02]
- HANSEN R ET AL: "Seamless Indoor/Outdoor Positioning Handover for Location-Based Services in Streamspin", MOBILE DATA MANAGEMENT: SYSTEMS, SERVICES AND MIDDLEWARE, 2009. MDM '09. TENTH INTERNATIONAL CONFERENCE ON, IEEE, PISCATAWAY, NJ, USA, 18 May 2009 (2009-05-18), pages 267-272, XP031476829, ISBN: 978-1-4244-4153-2

## Description

### TECHNICAL FIELD

The present disclosure relates to the technical field of positioning, and particularly to a positioning information creation method, a vehicle-mounted terminal, a server device, and a positioning system.

### BACKGROUND

In daily life, when a vehicle enters an indoor scenario, such as an indoor parking lot, from an outdoor scenario, it is often necessary to switch the positioning programs to position the vehicle. For example, when the vehicle is outdoors, it directly uses the map in the global coordinate system for positioning, such as Amap, Baidu Map, etc. When the vehicle enters an indoor parking lot, it cannot use Amap or Baidu Map to obtain accurate positioning in the indoor parking lot, due to the weak Global Positioning System (GPS) signal, which reduces the positioning efficiency. US2015/309180A1 provides a method for determining a geo coordinate for an indoor location. Wilfinger Roman *et al.* provides an indoor position determination method (see "Indoor position determination using location fingerprinting and vehicle sensor data", 2016 EUROPEAN NAVIGATION CONFERENCE (ENC), IEEE, 30 May 2016, pages 1-9).

### SUMMARY

The embodiments of the present disclosure disclose a positioning information creation method, a vehicle-mounted terminal, a server device, and a positioning system, which can improve positioning efficiency.

The solution is provided by the features of the independent claims. Variations are as described by the dependent claims.

A first aspect of the embodiments of the present disclosure discloses a positioning information creation method, including:
acquiring first positioning information of a vehicle outside a target environment, the first positioning information including at least coordinate values of the vehicle outside the target environment, and the target environment being an environment in which a positioning signal strength is smaller than a preset threshold;
acquiring a vehicle trajectory of the vehicle in the target environment and wireless signal information in the target environment in response to the vehicle entering the target environment, and generating second positioning information of the vehicle according to the vehicle trajectory and the wireless signal information, wherein the vehicle trajectory carries coordinate values of the vehicle in the target environment, and the wireless signal information includes at least an address of a wireless signal source and a signal strength of the wireless signal source; and
associating the first positioning information with the second positioning information according to the coordinate values of the vehicle outside the target environment and the coordinate values of the vehicle in the target environment to generate location fingerprint information, and transmitting the location fingerprint information to a server device to trigger the server device to store the location fingerprint information in a location fingerprint database corresponding to the target environment, the location fingerprint database being provided for a terminal device to achieve positioning in a global coordinate system in response to entering the target environment from outside of the target environment.

In the first aspect of the embodiment of the present disclosure, said acquiring the vehicle trajectory of the vehicle in the target environment and the wireless signal information in the target environment in response to the vehicle entering the target environment, and said generating the second positioning information of the vehicle according to the vehicle trajectory and the wireless signal information include:
acquiring, in response to the vehicle entering the target environment, the vehicle trajectory of the vehicle in the target environment through an odometer of the vehicle and an Inertial Measurement Unit (IMU) of the vehicle;
collecting the wireless signal information in the target environment; and
performing segmentation processing on the vehicle trajectory according to a preset distance to obtain a plurality of first vehicle sub-trajectories, and associating the plurality of first vehicle sub-trajectories with the wireless signal information collected on the plurality of first vehicle sub-trajectories to generate the second positioning information of the vehicle.

As an alternative embodiment, in the first aspect of the embodiment of the present disclosure, the method further includes:
performing an error calibration on the IMU, when it is detected that the vehicle is stationary, to correct a drift error of the IMU, before the vehicle enters the target environment.

As an alternative embodiment, in the first aspect of the embodiment of the present disclosure, said associating the first positioning information with the second positioning information according to the coordinate values of the vehicle outside the target environment and the coordinate values of the vehicle in the target environment to generate location fingerprint information includes:
acquiring first target coordinate values among the coordinate values of the vehicle outside the target environment, the first target coordinate values being the last coordinate values obtained before the vehicle enters the target environment;
acquiring second target coordinate values among the coordinate values of the vehicle in the target environment, the second target coordinate values being the first coordinate values obtained after the vehicle enters the target environment; and
fitting the first target coordinate values and the second target coordinate values to associate the first positioning information with the second positioning information to generate the location fingerprint information.

A second aspect of the embodiments of the present disclosure discloses a positioning information creation method, including:
acquiring location fingerprint information transmitted by a vehicle-mounted terminal, wherein the location fingerprint information is generated by: the vehicle-mounted terminal acquiring first positioning information of a vehicle outside a target environment, the first positioning information comprising at least coordinate values of the vehicle outside the target environment, and the target environment being an environment in which a positioning signal strength is smaller than a preset threshold; and in response to the vehicle entering the target environment, the vehicle-mounted terminal acquiring a vehicle trajectory of the vehicle in the target environment and wireless signal information in the target environment, and generating second positioning information of the vehicle according to the vehicle trajectory and the wireless signal information, the vehicle trajectory carrying coordinate values of the vehicle in the target environment, and the wireless signal information comprising at least an address of a wireless signal source and a signal strength of the wireless signal source; and the vehicle-mounted terminal associating the first positioning information with the second positioning information according to the coordinate values of the vehicle outside the target environment and the coordinate values of the vehicle in the target environment to generate the location fingerprint information; and
storing the location fingerprint information in a location fingerprint database corresponding to the target environment, the location fingerprint database being provided for the terminal device to achieve a positioning in a global coordinate system in response to entering the target environment from outside of the target environment. The vehicle-mounted terminal acquiring the vehicle trajectory of the vehicle in the target environment and the wireless signal information in the target environment, and generating the second positioning information of the vehicle according to the vehicle trajectory and the wireless signal information includes: the vehicle-mounted terminal acquiring, in response to the vehicle entering the target environment, the vehicle trajectory of the vehicle in the target environment through an odometer of the vehicle and an Inertial Measurement Unit (IMU) of the vehicle; the vehicle-mounted terminal collecting the wireless signal information in the target environment; and the vehicle-mounted terminal performing segmentation processing on the vehicle trajectory according to a preset distance to obtain a plurality of first vehicle sub-trajectories, and associating the plurality of first vehicle sub-trajectories with the wireless signal information collected on the plurality of first vehicle sub-trajectories to generate the second positioning information of the vehicle.

As an alternative embodiment, in the second aspect of the embodiment of the present disclosure, said storing the location fingerprint information in the location fingerprint database corresponding to the target environment includes:
determining whether the target environment is an unfamiliar environment;
when the target environment is not the unfamiliar environment, detecting whether to-be-fused location fingerprint information matching the location fingerprint information exists in the location fingerprint database; and
performing first fusion processing on the location fingerprint information and the to-be-fused location fingerprint information when the to-be-fused location fingerprint information matching the location fingerprint information exists in the location fingerprint database;
when the to-be-fused location fingerprint information does not exit, storing the location fingerprint information in the location fingerprint database.

As an alternative embodiment, in the second aspect of the embodiment of the present disclosure, the method further includes:
when the target environment is the unfamiliar environment, creating a new location fingerprint database in a server device, and storing the location fingerprint information in the new location fingerprint database.

As an alternative embodiment, in the second aspect of the embodiment of the present disclosure, said performing the first fusion processing on the location fingerprint information and the to-be-fused location fingerprint information when the to-be-fused location fingerprint information matching the location fingerprint information exists in the location fingerprint database includes:
when the to-be-fused location fingerprint information matching the location fingerprint information exists in the location fingerprint database, determining whether there is a first target fingerprint segment in first fingerprint segments that is incapable of matching any one of second fingerprint segments, wherein the first fingerprint segments comprise a first vehicle sub-trajectory and wireless signal information corresponding to the first vehicle sub-trajectory; the first fingerprint segments are obtained by performing segmentation processing on the vehicle trajectory contained in the location fingerprint information according to a preset distance; the second fingerprint segments comprise a second vehicle sub-trajectory and wireless signal information corresponding to the second vehicle sub-trajectory; and the second vehicle sub-trajectory is obtained by performing segmentation processing on the vehicle trajectory contained in the to-be-fused location fingerprint information according to the preset distance,
when there is no first target fingerprint segment in first fingerprint segments that is incapable of matching any one of second fingerprint segments, performing weighted averaging on the first vehicle sub-trajectory and a target vehicle sub-trajectory to obtain a first fused vehicle sub-trajectory; performing weighted averaging on first wireless signal information and second wireless signal information to obtain first fused wireless signal information corresponding to the first fused vehicle sub-trajectory; increasing a count value of a maturity degree of the second fingerprint segment, where the target vehicle sub-trajectory is located, by a preset value to obtain a first fused maturity degree; and fusing the location fingerprint information and the to-be-fused location fingerprint information according to the first fused vehicle sub-trajectory, the first fused wireless signal information, and the first fused maturity degree, wherein the target vehicle sub-trajectory is the second vehicle sub-trajectory that matches the first vehicle sub-trajectory; the first wireless signal information is the wireless signal information corresponding to the first vehicle sub-trajectory, and the second wireless signal information is wireless signal information corresponding to the target vehicle sub-trajectory;
when there is a first target fingerprint segment in first fingerprint segments that is incapable of matching any one of second fingerprint segments, adding the first target fingerprint segment to the to-be-fused location fingerprint information.

A third aspect of the embodiments of the present disclosure discloses a vehicle-mounted terminal, which includes:
a first acquisition unit configured to acquire first positioning information of a vehicle outside a target environment, the first positioning information comprising at least coordinate values of the vehicle outside the target environment, and the target environment being an environment in which a positioning signal strength is smaller than a preset threshold;
a generation unit configured to: acquire a vehicle trajectory of the vehicle in the target environment and wireless signal information in the target environment in response to the vehicle entering the target environment, and generate second positioning information of the vehicle according to the vehicle trajectory and the wireless signal information, wherein the vehicle trajectory carries coordinate values of the vehicle in the target environment, and the wireless signal information comprises at least an address of a wireless signal source and a signal strength of the wireless signal source; and
a transmission unit configured to: associate the first positioning information with the second positioning information according to the coordinate values of the vehicle outside the target environment and the coordinate values of the vehicle in the target environment to generate location fingerprint information, and transmit the location fingerprint information to a server device to trigger the server device to store the location fingerprint information in a location fingerprint database corresponding to the target environment, the location fingerprint database being provided for a terminal device to achieve a positioning in a global coordinate system in response to entering the target environment from outside of the target environment. The generation unit is further configured to: acquire, in response to the vehicle entering the target environment, the vehicle trajectory of the vehicle in the target environment through an odometer of the vehicle and an Inertial Measurement Unit (IMU) of the vehicle; collect the wireless signal information in the target environment; and perform segmentation processing on the vehicle trajectory according to a preset distance to obtain a plurality of first vehicle sub-trajectories, and associate the plurality of first vehicle sub-trajectories with the wireless signal information collected on the plurality of first vehicle sub-trajectories to generate the second positioning information of the vehicle.

A fourth aspect of the embodiments of the present disclosure discloses a server device, which includes:
a second acquisition unit configured to acquire location fingerprint information transmitted by a vehicle-mounted terminal, wherein the location fingerprint information is generated by: the vehicle-mounted terminal acquiring first positioning information of a vehicle outside a target environment, the first positioning information comprising at least coordinate values of the vehicle outside the target environment, and the target environment being an environment in which a positioning signal strength is smaller than a preset threshold; and in response to the vehicle entering the target environment, the vehicle-mounted terminal acquiring a vehicle trajectory of the vehicle in the target environment and wireless signal information in the target environment, and generating second positioning information of the vehicle according to the vehicle trajectory and the wireless signal information, the vehicle trajectory carrying coordinate values of the vehicle in the target environment, and the wireless signal information comprising at least an address of a wireless signal source and a signal strength of the wireless signal source; and the vehicle-mounted terminal associating the first positioning information with the second positioning information according to the coordinate values of the vehicle outside the target environment and the coordinate values of the vehicle in the target environment to generate the location fingerprint information; and
a storage unit configured to store the location fingerprint information in a location fingerprint database corresponding to the target environment, the location fingerprint database being provided for the terminal device to achieve a positioning in a global coordinate system in response to entering the target environment from outside of the target environment. The vehicle-mounted terminal acquiring the vehicle trajectory of the vehicle in the target environment and the wireless signal information in the target environment, and generating the second positioning information of the vehicle according to the vehicle trajectory and the wireless signal information includes: the vehicle-mounted terminal acquiring, in response to the vehicle entering the target environment, the vehicle trajectory of the vehicle in the target environment through an odometer of the vehicle and an Inertial Measurement Unit (IMU) of the vehicle; the vehicle-mounted terminal collecting the wireless signal information in the target environment; and the vehicle-mounted terminal performing segmentation processing on the vehicle trajectory according to a preset distance to obtain a plurality of first vehicle sub-trajectories, and associating the plurality of first vehicle sub-trajectories with the wireless signal information collected on the plurality of first vehicle sub-trajectories to generate the second positioning information of the vehicle

A fifth aspect of the embodiments of the present disclosure discloses a positioning system, including a terminal device, a vehicle-mounted terminal, and a server device,
wherein the terminal device is configured to:
collect wireless signal information around the terminal device in response to the terminal device entering the target environment from outside the target environment, the wireless signal information comprising at least the address of the wireless signal source and the signal strength of the wireless signal source ;
transmit, to the server device, a positioning request carrying the wireless signal information around the terminal device, in such a manner that the server device determines, from the location fingerprint database corresponding to the target environment, target location fingerprint information that matches the wireless signal information around the terminal device and feedbacks the target location fingerprint information to the terminal device; and
achieve the positioning in the global coordinate system according to the target location fingerprint information transmitted by the server device; or
wherein the terminal device is configured to:
collect wireless signal information around the terminal device in response to the terminal device entering the target environment from the outside of the target environment, the wireless signal information comprising at least the address of the wireless signal source and the signal strength of the wireless signal source;
transmit, to the server device, a positioning request carrying the wireless signal information around the terminal device for accessing the location fingerprint database corresponding to the target environment in the server device; and determine, from the location fingerprint database corresponding to the target environment, the target location fingerprint information that matches the wireless signal information around the terminal device; and
achieve the positioning in the global coordinate system according to the target location fingerprint information.

A sixth aspect of the embodiments of the present disclosure discloses a vehicle, which includes the vehicle-mounted terminal according to the third aspect of the embodiments of the present disclosure.

A seventh aspect of the embodiments of the present disclosure discloses a computer-readable storage medium that stores a computer program, wherein the computer program causes a computer to perform the positioning information creation method disclosed in the first aspect of the embodiment of the present disclosure, and the positioning information creation method disclosed in the second aspect of the embodiment of the present disclosure.

An eighth aspect of the embodiments of the present disclosure discloses a computer program product, which when running on a computer, causes a computer to execute part or all of the steps of any of methods according to the first aspect and part or all of the steps of any of methods according to the second aspect.

A ninth aspect of the embodiments of the present disclosure discloses an application publishing platform. The application publishing platform is used to publish a computer program product. The computer program product, when executed on a computer, causes the computer to perform part or all of the steps of any of methods according to the first aspect and part or all of the steps of any of methods according to the second aspect.

Compared with the prior art, the embodiments of the present disclosure have beneficial effects as follows.

In the embodiments of the present disclosure, the target environment is an environment in which the positioning signal strength is smaller than a preset threshold. The first positioning information acquired by the vehicle-mounted terminal contains the coordinate values of the vehicle outside the target environment. When the vehicle enters the target environment from the outside of the target environment, the second positioning information acquired by the vehicle-mounted terminal contains the coordinate values of the vehicle in the target environment. According to the coordinate values, the first positioning information and the second positioning information can be associated, and the generated location fingerprint information is transmitted to the server device for storage. Since the location fingerprint information in the location fingerprint database associates the first location information with the second location information, the terminal device or the server device can determine, based on the wireless signal information around the terminal device that is collected by the terminal device, the matching target location fingerprint information from the location fingerprint database corresponding to the target environment in the server device, when the terminal device enters the target environment from the outside of the target environment. The target location fingerprint information has associated the first positioning information outside the target environment with the second positioning information in the target environment, and thus the terminal device can directly utilize the map in the global coordinate system used outside the target environment for positioning, without re-switching to other programs or applications, which may simplify the positioning process and improve the positioning efficiency. For example, the terminal device uses the Amap to locate outside the target environment. When the terminal device enters the target environment from the outside of the target environment, it can determine, from the location fingerprint database corresponding to the target environment, the target location fingerprint information that matches the wireless signal information around the terminal device, and load the target location fingerprint information to the Amap for positioning. In addition, the terminal device may be the vehicle-mounted terminal of the vehicle. In this case, when the vehicle enters the target environment from the outside of the target environment, the map such as Amap in the global coordinate system used for positioning outside the target environment can be directly used for positioning, without switching the positioning programs to position the vehicle.

In addition, the solutions of the present disclosure are not limited to the related data of a specified scenario provided by the third party, which, for example, is unnecessary to provide the map of the target environment and the matching positioning database, and thus they may be generally applied to the most scenarios.

### BRIEF DESCRIPTION OF DRAWINGS

In order to describe the technical solutions according to the embodiments of the present disclosure more clearly, the drawings used in the embodiments will be introduced briefly below. It is apparent to those skilled in the art that the drawings described below only illustrate some embodiments of the present disclosure, and other drawings can be obtained from these drawings without any creative labor. In the drawings:
FIG. 1 is a schematic flowchart of a positioning information creation method disclosed in an embodiment of the present disclosure;
FIG. 2 is a schematic flowchart of another positioning information creation method disclosed in an embodiment of the present disclosure;
FIG. 3 is a schematic structural diagram of a vehicle-mounted terminal disclosed in an embodiment of the present disclosure;
FIG. 4 is a schematic structural diagram of a server device disclosed in an embodiment of the present disclosure; and
FIG. 5 is a schematic structural diagram of a positioning system disclosed in an embodiment of the present disclosure.

### DESCRIPTION OF EMBODIMENTS

The technical solutions in the embodiments of the present disclosure will be clearly and completely described below in conjunction with the accompanying drawings in the embodiments of the present disclosure. Obviously, the described embodiments are only a part of the embodiments of the present disclosure, rather than all the embodiments.

It should be noted that the terms "first", "second", "third", and "fourth" etc. in the specification and claims of the present disclosure are used to distinguish different objects, rather than to describe a specific sequence. The terms "including/comprising" and "having" and any variations thereof in the embodiments of the present disclosure are intended to cover non-exclusive inclusions. For example, a process, a method, a system, a product, or a device that includes a series of steps or units is not necessarily limited to those clearly listed steps or units, but may include other steps or units that are not clearly listed or are inherent to the process, the method, the product, or the device.

In the present disclosure, the term for indicating an orientation or a positional relationship, such as "upper", "lower", "left", "right", "front", "rear", "top", "bottom", "inner", "outer", "middle", "vertical", "horizontal", "lateral", "longitudinal", and the like, is based on the orientation or positional relationship as shown in the drawings. These terms are mainly used to better describe the present disclosure and the embodiments thereof, and are not used to limit that the indicated device, element, or component must have a specific orientation, or must be constructed and operated in a specific orientation.

And, some of the above terms may be used to indicate other meanings in addition to the orientation or positional relationship. For example, the term "upper" may also be used to indicate a certain dependency relationship or connection relationship in some cases. For those skilled in the art, the specific meanings of those terms in the present disclosure may be understood according to specific situations.

In addition, the terms "installing", "setting", "provided with", "connected to", "connected with", etc. should be understood broadly. For example, it may be connected fixedly, detachably, or integrally; or may be connected mechanically or electrically; may be connected directly, or indirectly via an intermediate medium, or internally between two devices, elements or components. For those skilled in the art, the specific meanings of those terms in the present disclosure may be understood according to specific situations.

The embodiments of the present disclosure disclose a positioning information creation method, a vehicle-mounted terminal, a server device, and a positioning system, which may improve the positioning efficiency. A detailed description will be given below in conjunction with the accompanying drawings.

### First Embodiment

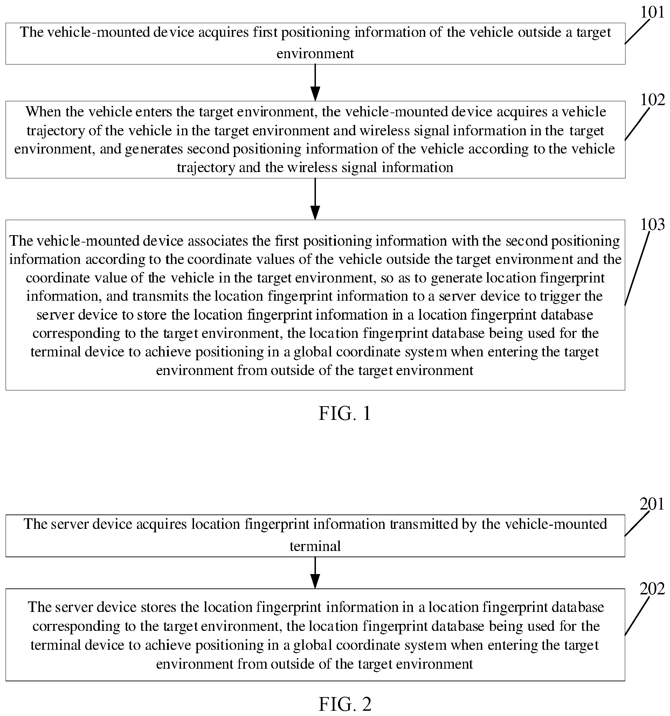

Reference may be made to FIG. 1, which is a schematic flowchart of a positioning information creation method disclosed in an embodiment of the present disclosure. As shown in FIG. 1, the method may include the following steps.

101. A vehicle-mounted terminal acquires first positioning information of a vehicle outside a target environment.

In an embodiment of the present disclosure, the first positioning information includes at least coordinate values of the vehicle outside the target environment, and the target environment is environment in which a positioning signal strength is smaller than a preset threshold. The preset threshold may be a threshold set by the testers based on a large number of experimental results, which is not limited in the embodiments of the present disclosure. The coordinate values include a longitude, latitude, and altitude of the vehicle in the global coordinate system. The positioning signal may be a Global Positioning System (GPS) signal or a Beidou satellite positioning system signal, which is not limited in the embodiments of the present disclosure.

In an embodiment of the present disclosure, the vehicle-mounted terminal may have a built-in positioning module, such as a global GPS module, a Beidou satellite positioning system. The embodiment of the present disclosure takes the GPS module as an example for illustration, but the present disclosure should not be limited thereto. The GPS module has higher integration sensitivity and lower power consumption, and it may track up to 20 satellites at the same time, and quickly position to achieve 1Hz navigation. Therefore, the vehicle-mounted terminal may acquire the first positioning information of the vehicle outside the target environment by its built-in GPS module.

Further, as an optional implementation, in the process of acquiring the first positioning information of the vehicle outside the target environment by the built-in GPS module of the vehicle-mounted terminal, the vehicle-mounted terminal acquires third positioning information of the vehicle outside the target environment through an odometer and IMU of the vehicle, and fuse the first positioning information outside the target environment that is acquired by its built-in GPS module with the third positioning information acquired through the odometer and IMU of the vehicle using the Kalman filtering algorithm fusion method where a state propagation equation is provided through the odometer and IMU and a renewal equation of measurements is provided by the GPS module. The accuracy of the positioning information of the vehicle outside the target environment may be improved.

102. In response to the vehicle entering the target environment, the vehicle-mounted terminal acquires a vehicle trajectory of the vehicle in the target environment and wireless signal information in the target environment, and generates second positioning information of the vehicle according to the vehicle trajectory and the wireless signal information.

In an embodiment of the present disclosure, the vehicle trajectory carries coordinate values of the vehicle in the target environment. The coordinate values include a longitude, latitude, and altitude of the vehicle in the global coordinate system. The wireless signal information includes at least an address of a wireless signal source and a signal strength of the wireless signal source. The address of the wireless signal source may be a MAC address of a Wi-Fi signal and/or a MAC address of a Bluetooth signal. In an embodiment of the present disclosure, each wireless Access Point (AP) has one globally unique MAC address used to confirm the location of the wireless AP.

The step 102 of that in response to the vehicle entering the target environment, the vehicle-mounted terminal acquires the vehicle trajectory of the vehicle in the target environment and the wireless signal information in the target environment, and generates the second positioning information of the vehicle according to the vehicle trajectory and the wireless signal information, includes:
acquiring, by the vehicle-mounted terminal, the vehicle trajectory of the vehicle in the target environment through the odometer of the vehicle and the IMU of the vehicle in response to the vehicle entering the target environment;
collecting, by the vehicle-mounted terminal, the wireless signal information in the target environment; and
performing, by the vehicle-mounted terminal, segmentation processing on the vehicle trajectory according to a preset distance to obtain a plurality of first vehicle sub-trajectories, and associating the first vehicle sub-trajectory with the wireless signal information collected on the first vehicle sub-trajectory to generate the second positioning information of the vehicle.

In an embodiment of the present disclosure, a GPS signal is taken as an example of the positioning signal for illustration. When the vehicle enters the target environment, the GPS module cannot perform accurate positioning due to the weaker GPS signal. Therefore, the vehicle-mounted terminal may acquire the vehicle trajectory generated when the vehicle is driving in the target environment through the odometer of the vehicle and the IMU of the vehicle; collect the wireless signal information in the target environment during the driving process; then, perform the segmentation processing on the vehicle trajectory according to the preset distance to obtain a plurality of first vehicle sub-trajectories; and associate the first vehicle sub-trajectories with the wireless signal information collected on the first vehicle sub-trajectories to generate the second positioning information of the vehicle. The preset distance may be a distance set by the testers based on a large number of experimental results, which is not limited in the embodiments of the present disclosure.

For example, assuming that the vehicle trajectory generated when the vehicle is driving in the target environment and acquired through the odometer of the vehicle and the IMU of the vehicle is represented by A, and the wireless signal information collected in the target environment during the driving process is represented by B, segments of first vehicle sub-trajectories that are obtained by performing the segmentation processing on the vehicle trajectory A are represented by a₁, a₂, a₃, and a₄; the wireless signal information collected on each segment of the first vehicle sub-trajectory is represented by b₁, b₂, b₃, and b₄, respectively, where a₁ is associated with b₁, a₂ is associated with b₂, as is associated with b₃, and a₄ is associated with b₄ to obtain a₁b₁, a₂b₂, a₃b₃, and a₄b₄, i.e., the second positioning information of the vehicle.

By segmenting the vehicle trajectory generated when the vehicle is driving in the target environment according to the preset distance, and associating the obtained first vehicle sub-trajectories with the wireless signal information collected on the respective first vehicle sub-trajectories, each road section in the target environment may be ensured to be distinguishable, thereby improving the matching accuracy.

Further, in the process of acquiring the vehicle trajectory of the vehicle in the target environment by the vehicle-mounted terminal through the odometer of the vehicle and the IMU of the vehicle, the vehicle trajectory of the vehicle in the target environment may also be acquired through a visual sensor of the vehicle, and the vehicle trajectory obtained through the odometer and IMU may be fused with the vehicle trajectory obtained through the visual sensor.

In an embodiment of the present disclosure, the visual sensor of the vehicle may include an image capture device, such as a camera, which is used to capture images of the vehicle during driving, and obtain the vehicle trajectory of the vehicle in the target environment by analyzing the images.

Specifically, in an embodiment of the present disclosure, the vehicle-mounted terminal may import the vehicle trajectory obtained through the odometer and IMU into an optimization process of a visual algorithm for the vehicle trajectory obtained through the visual sensor, so as to fuse the vehicle trajectory obtained through the odometer and IMU with the vehicle trajectory obtained through the visual sensor to improve the accuracy of the vehicle trajectory.

The vehicle trajectory of the vehicle in the target environment is acquired by a combination of the odometer, IMU, and visual sensor, which can improve the accuracy of the vehicle trajectory.

As an optional implementation, before the vehicle enters the target environment, the following step may be performed:
before the vehicle enters the target environment, the vehicle-mounted terminal performs an error calibration on the IMU to correct a drift error of the IMU, when it is detected that the vehicle is stationary.

In an embodiment of the present disclosure, since the IMU may produce the drift error and the drift errors will accumulate over time, the vehicle-mounted terminal may use zero-speed correction to perform the error calibration on the IMU in order to improve the measurement accuracy of the IMU. The zero-speed correction is an effective method to solve the accuracy reduction of the IMU when the IMU works for a long time.

With this optional implementation, the drift error of the IMU may be corrected, and the measurement accuracy of the IMU may be improved.

The vehicle-mounted terminal associates the first positioning information with the second positioning information according to the coordinate values of the vehicle outside the target environment and the coordinate values of the vehicle in the target environment, to generate location fingerprint information; and transmits the location fingerprint information to a server device to trigger the server device to store the location fingerprint information in a location fingerprint database corresponding to the target environment, the location fingerprint database being provided for a terminal device to achieve a positioning in a global coordinate system in response to entering the target environment from outside of the target environment.

In an embodiment of the present disclosure, a communication connection is established between the server device and the vehicle-mounted terminal, which is used for fused storing or directly storing the location fingerprint information transmitted by the vehicle-mounted terminal. The location fingerprint information is stored in the location fingerprint database corresponding to the target environment. The location fingerprint database may be provided for the terminal device to achieve a positioning on the indoor map in the global coordinate system when entering the target environment from the outside of the target environment. The indoor map used comes from a map provider, such as Amap, Baidu Map, etc., which is not limited by the embodiments of the present disclosure.

In an embodiment of the present disclosure, the terminal device may be various devices, such as a mobile phone, a mobile tablet, a Personal Digital Assistant (PDA), a Mobile Internet Device (MID), from which people are increasingly inseparable in work and life. The terminal device may support network technologies including, but not limited to: Global System for Mobile Communications (GSM), General Packet Radio Service (GPRS), Code Division Multiple Access (CDMA), Wideband Code Division Multiple Access (W-CDMA), CDMA2000, IMT Single Carrier, Enhanced Data Rates for GSM Evolution (EDGE), Long Term Evolution technology (LTE), Advanced Long Term Evolution technology, Time-Division Long-Term Evolution technology (TD-LTE), High Performance Radio Local Area Network (HiperLAN), High Performance Radio Wide Area Network (HiperWAN), Local Multipoint Distribution Service (LMDS), Global Interoperability for Microwave Access (WiMAX), ZigBee Protocol (ZigBee), Bluetooth, Orthogonal Frequency Division Multiplexing (OFDM), High-Capacity Space Division Multiple Access (HC-SDMA), Universal Mobile Telecommunications System (UMTS), Universal Mobile Telecommunications System Time Division Duplex (UMTS-TDD), Evolved High Speed Packet Access (HSPA+), Time Division Synchronous Code Division Multiple Access (TD-SCDMA), Evolution Data Optimization (EV-DO), Digital Enhanced Cordless Communication (DECT), and others.

In an embodiment of the present disclosure, an operating system of the aforementioned terminal device may include, but is not limited to, Android operating system, IOS operating system, Symbian operating system, Black Berry operating system, Windows operating system, etc., which is not limited by the embodiments of the present disclosure.

In an embodiment of the present disclosure, the terminal device may also be a vehicle-mounted terminal of the vehicle, which is not limited in the embodiments of the present disclosure. For example, when the terminal device is a vehicle-mounted terminal of a vehicle, assuming that the vehicle uses the Amap for navigation and positioning outside the target environment, if the vehicle enters the target environment such as an indoor parking lot from the outside of the target environment, the target location fingerprint information that matches the wireless signal information around the vehicle collected by the vehicle-mounted terminal may be determined from the location fingerprint database corresponding to the indoor parking lot, and the target location fingerprint information can be loaded on the Amap to continue the navigation and positioning without switching the positioning programs for the navigation and positioning of the vehicle, thereby simplifying the positioning process of the vehicle and improving the navigation and positioning efficiency of the vehicle.

As an optional implementation, the vehicle-mounted terminal associating the first positioning information with the second positioning information according to the coordinate values of the vehicle outside the target environment and the coordinate values of the vehicle in the target environment to generate location fingerprint information, includes:
acquiring, by the vehicle-mounted terminal, first target coordinate values among the coordinate values of the vehicle outside the target environment, the first target coordinate values being the last coordinate values obtained before the vehicle enters the target environment;
acquiring, by the vehicle-mounted terminal, second target coordinate values among the coordinate values of the vehicle in the target environment, the second target coordinate values being the first coordinate values obtained after the vehicle enters the target environment; and
fitting the first target coordinate values and the second target coordinate values to associate the first positioning information with the second positioning information to generate the location fingerprint information.

In an embodiment of the present disclosure, the first location information of the vehicle outside the target environment is associated with the second location information of the vehicle in the target environment by fitting the last coordinate values obtained (by GPS) before the vehicle enters the target environment and the first coordinate values obtained (through the odometer and IMU) after the vehicle enters the target environment. The fitting method may be fitted by a spline curve, such as a cubic B-spline, which is not limited in the embodiments of the present disclosure.

With this optional implementation, the first positioning information of the vehicle outside the target environment is associated with the second positioning information of the vehicle in the target environment in such a manner that when the terminal device enters the target environment from the outside of the target environment, the second positioning information in the target environment is linked on map in the global coordinate system without re-switching to another program or application, thereby simplifying the positioning process and improving the positioning efficiency.

Thus, with implementing the method as described in FIG. 1, the first positioning information acquired by the vehicle-mounted terminal contains the coordinate values of the vehicle outside the target environment; when the vehicle enters the target environment from the outside of the target environment, the second positioning information acquired by the vehicle-mounted terminal contains the coordinate values of the vehicle in the target environment. The first positioning information and the second positioning information may be associated according to the coordinate values, and the generated location fingerprint information is transmitted to the server device for storage. Since the location fingerprint information in the location fingerprint database of the server device associates the first location information with the second location information, the terminal device or the server device may determine, based on the wireless signal information around the terminal device that is collected by the terminal device, the matching target location fingerprint information from the location fingerprint database corresponding to the target environment in the server device, when the terminal device enters the target environment from the outside of the target environment. The target location fingerprint information has associated the first positioning information outside the target environment with the second positioning information in the target environment, and thus the terminal device can directly utilize the map in the global coordinate system used outside the target environment for positioning, without re-switching to other programs or applications, thereby simplifying the positioning process and improving the positioning efficiency. In addition, the terminal device may be the vehicle-mounted terminal of the vehicle. In this case, when the vehicle enters the target environment from the outside of the target environment, there is no need to switch the positioning programs to position the vehicle, and the map, such as Amap, in the global coordinate system for the positioning outside the target environment can be directly used for positioning. In addition, the solutions of the present disclosure are not limited to the related data of a specified scenario provided by the third party, which, for example, is unnecessary to provide the map of the target environment and the matching positioning database, and thus they may be generally applied to the most scenarios.

### Second Embodiment

Reference may be made to FIG. 2, which is a schematic flowchart of another positioning information creation method disclosed in an embodiment of the present disclosure. As shown in FIG. 2, the method may include the following steps.

201. The server device acquires location fingerprint information transmitted by a vehicle-mounted terminal.

In an embodiment of the present disclosure, the vehicle-mounted terminal acquires first positioning information of a vehicle outside the target environment. The target environment is an environment in which a positioning signal strength is smaller than a preset threshold. The first positioning information includes at least coordinate values of the vehicle outside the target environment. The coordinate values include a longitude, latitude, and altitude of the vehicle in the global coordinate system. The positioning signal may be a Global Positioning System (GPS) signal or a Beidou satellite positioning system signal, which is not limited in the embodiments of the present disclosure. When the vehicle enters the target environment, the vehicle-mounted terminal acquires a vehicle trajectory of the vehicle in the target environment and wireless signal information in the target environment, and generates second positioning information of the vehicle according to the vehicle trajectory and the wireless signal information, wherein the vehicle trajectory carries coordinate values of the vehicle in the target environment, and the wireless signal information includes at least an address of a wireless signal source and a signal strength of the wireless signal source; and the vehicle-mounted terminal associates the first positioning information with the second positioning information according to the coordinate values of the vehicle outside the target environment and the coordinate values of the vehicle in the target environment, so as to generate the location fingerprint information.

202. The server device stores the location fingerprint information in a location fingerprint database corresponding to the target environment, the location fingerprint database being provided for the terminal device to achieve a positioning in a global coordinate system in response to entering the target environment from outside of the target environment.

In an embodiment of the present disclosure, a communication connection is established between the server device and the vehicle-mounted terminal, which is used for fused storing or directly storing the location fingerprint information transmitted by the vehicle-mounted terminal. The location fingerprint information is stored in the location fingerprint database corresponding to the target environment. The location fingerprint database may be provided for the terminal device to achieve a positioning on the indoor map in the global coordinate system when entering the target environment from the outside of the target environment. The indoor map used comes from a map provider, such as Amap, Baidu Map, etc., which is not limited by the embodiments of the present disclosure.

In an embodiment of the present disclosure, the terminal device may be various devices, such as a mobile phone, a mobile tablet, a Personal Digital Assistant (PDA), a Mobile Internet Device (MID), from which people are increasingly inseparable in work and life, or a vehicle-mounted terminal of the vehicle.

As an optional implementation, said storing, by the server device, the location fingerprint information in a location fingerprint database corresponding to the target environment, includes:
determining, by the server device, whether the target environment is an unfamiliar environment;
when the target environment is not the unfamiliar environment, detecting, by the server device, whether to-be-fused fingerprint information matching the location fingerprint information exists in the location fingerprint database corresponding to the target environment; and
when it is detected that the to-be-fused location fingerprint information matching the location fingerprint information exists in the location fingerprint database corresponding to the target environment, performing, by the server device, first fusion processing on the location fingerprint information and the to-be-fused location fingerprint information;
when it is detected that the to-be-fused location fingerprint information matching the location fingerprint information does not exist in the location fingerprint database corresponding to the target environment, storing, by the server device, the location fingerprint information in the location fingerprint database.

In an embodiment of the present disclosure, after the server device acquires the location fingerprint information transmitted by the vehicle-mounted terminal, it stores the location fingerprint information in the location fingerprint database corresponding to the target environment by directly storing or storing it after being fused with the to-be-fused location fingerprint information in the location fingerprint database. If it is determined that the target environment is not the unfamiliar environment, it indicates that the vehicle is not driving into the target environment for the first time, and accordingly, the server device has a location fingerprint database corresponding to the target environment. Then, it is detected whether the to-be-fused location fingerprint information matching the location fingerprint information exists in the location fingerprint database corresponding to the target environment. Since the first positioning information in the embodiment of the present disclosure is used for linking the second positioning information, the first positioning information is not necessary to be matched. At this time, only the second positioning information (vehicle trajectory and wireless signal information) in the location fingerprint information needs to be matched. If it is detected that the to-be-fused location fingerprint information matching the location fingerprint information exists in the location fingerprint database corresponding to the target environment, it indicates that the location fingerprint database has the to-be-fused location fingerprint information capable of being fused with the location fingerprint information. Then, the server device performs the first fusion processing on the location fingerprint information and the to-be-fused location fingerprint information. If it is detected that the to-be-fused location fingerprint information matching the location fingerprint information does not exist in the location fingerprint database corresponding to the target environment, it indicates that there is no to-be-fused location fingerprint information capable of being fused with the location fingerprint information in the location fingerprint database. Then, the server device stores the location fingerprint information in the location fingerprint database.

With this optional implementation, the location fingerprint database is continuously updated by fused storing or directly storing the location fingerprint information that is acquired multiple times and transmitted by the vehicle-mounted terminal, thereby improving the timeliness of the location fingerprint database.

As an optional implementation, when it is determined that the target environment is the unfamiliar environment, the server device creates a new location fingerprint database in the server device, and stores the location fingerprint information in the new location fingerprint database.

In an embodiment of the present disclosure, if it is determined that the target environment is the unfamiliar environment, it indicates that the vehicle enters the target environment for the first time, and accordingly, there is no location fingerprint database corresponding to the target environment in the server device. Thus, the server device may create a new location fingerprint database, and stores the location fingerprint information in the new location fingerprint database.

With this optional implementation, when the vehicle enters the target environment for the first time, the server device creates a new location fingerprint database, and stores the location fingerprint information transmitted by the vehicle terminal in the new location fingerprint database, thereby increasing a degree of completeness of the location fingerprint database.

As an optional implementation, said performing, by the server device, the first fusion processing on the location fingerprint information and the to-be-fused location fingerprint information when it is detected that the to-be-fused location fingerprint information matching the location fingerprint information exists in the location fingerprint database corresponding to the target environment includes:
when the to-be-fused location fingerprint information matching the location fingerprint information exists in the location fingerprint database, determining whether there is a first target fingerprint segment in first fingerprint segments that is incapable of matching any one of second fingerprint segments,
wherein the first fingerprint segments include a first vehicle sub-trajectory and wireless signal information corresponding to the first vehicle sub-trajectory; the first vehicle sub-trajectory is obtained by performing segmentation processing on the vehicle trajectory contained in the location fingerprint information according to a preset distance; the second fingerprint segments include a second vehicle sub-trajectory and wireless signal information corresponding to the second vehicle sub-trajectory; and the second vehicle sub-trajectory is obtained by performing segmentation processing on a vehicle trajectory contained in the to-be-fused location fingerprint information according to a preset distance;
if no, performing weighted averaging on the first vehicle sub-traj ectory and a target vehicle sub-trajectory to obtain a first fused vehicle sub-trajectory; performing weighted averaging on first wireless signal information and second wireless signal information to obtain first fused wireless signal information corresponding to the first fused vehicle sub-trajectory; increasing a count value of a maturity degree of the second fingerprint segment where the target vehicle sub-trajectory is located by a preset value to obtain a first fused maturity degree; and fusing the location fingerprint information and the to-be-fused location fingerprint information according to the first fused vehicle sub-trajectory, the first fused wireless signal information, and the first fused maturity degree,
wherein the target vehicle sub-trajectory is the second vehicle sub-trajectory that matches the first vehicle sub-trajectory; the first wireless signal information is the wireless signal information corresponding to the first vehicle sub-trajectory, and the second wireless signal information is the wireless signal information corresponding to the target vehicle sub-trajectory;
if yes, adding the first target fingerprint segment to the to-be-fused location fingerprint information.

In the embodiments of the present disclosure, the preset value may be a value set by the testers based on a large number of experimental results, which is not limited in the embodiments of the present disclosure.

In an embodiment of the present disclosure, when the to-be-fused location fingerprint information matching the location fingerprint information exists in the location fingerprint database corresponding to the target environment, the first fingerprint segment is compared with the second fingerprint segment, and it is determined whether there is a first target fingerprint segment in all of the first fingerprint segments that cannot match any one of the second fingerprint segments. If yes, it indicates that the location fingerprint information has one more segment (i.e., the first target fingerprint segment) than the to-be-fused location fingerprint information, that is, this time the vehicle has driven to a location that has not been reached before, and then the server device adds the first target fingerprint segment to the to-be-fused location fingerprint information; if no, it indicates that any one of the first fingerprint segments may match one of the plurality of second fingerprint segments, and then the server device fuses the location fingerprint information with the to-be-fused location fingerprint information.

For example, assuming that the vehicle trajectory contained in the location fingerprint information is A, the plurality of segments of first vehicle sub-trajectories obtained by performing segmentation according to the preset distance is a₁, a₂, a₃, and a₄, and the wireless signal information corresponding to the respective segments of the first vehicle sub-trajectories is b₁, b₂, b₃, and b₄, then the plurality of first fingerprint segments is a₁b₁, a₂b₂, a₃b₃, and a₄b₄, respectively; assuming that the vehicle trajectory contained in the to-be-fused location fingerprint information is C, the plurality of segments of second vehicle sub-trajectories obtained by performing segmentation according to the preset distance is c₁, c₂, c₃, and c₄, and the wireless signal information corresponding to the respective segments of the second vehicle sub-trajectories is d₁, d₂, d₃, and d₄, then the plurality of second fingerprint segments is c₁d₁, c₂d₂, c₃d₃, and c₄d₄, respectively. Then, it is determined whether there is a first target fingerprint segment in a₁b₁, a₂b₂, a₃b₃, and a₄b₄ that cannot match any of c₁d₁, c₂d₂, c₃d₃, and c₄d₄. Assuming that the first target fingerprint segmentation is a₄b₄, a₄b₄ is added to the to-be-fused location fingerprint information. If any one of c₁d₁, c₂d₂, c₃d₃, and c₄d₄ can match one of a₁b₁, a₂b₂, a₃b₃, and a₄b₄, and taking a₁b₁ matching with c₁d₁ as an example for illustration, the first fused vehicle sub-trajectory a₁c₁ is obtained by performing the weighted averaging on a₁ and c₁, the first fused wireless signal information bidi corresponding to the first fused vehicle sub-trajectory aici is obtained by performing the weighted averaging on bi and d₁, and a maturity degree of ci is increased by a preset value to obtain the first fusion maturity degree.

With this optional implementation, the timeliness of the location fingerprint database may be improved.

In an embodiment of the present disclosure, the location fingerprint information is stored in the location fingerprint database. Since the second positioning information in the location fingerprint information is composed of many fingerprint segments, the location fingerprint database also has these fingerprint segments, among which some fingerprint segments have not been updated for a long time. Therefore, in order to improve the quality of the location fingerprint database, as an optional implementation, the server device may also perform the following steps:
recording a timing, at which the location fingerprint information is stored in the location fingerprint database, as an update timing; or recording a timing, at which the first fusion processing is performed, as the update timing; and
comparing, according to a first preset time interval, the earliest update timing and the latest update timing among the update timings corresponding to third fingerprint segments to obtain a time difference;
determining whether the time difference is greater than a preset time threshold;
if yes, marking one of the third fingerprint segments corresponding to the earliest update timing as an expired fingerprint segment, and deleting the expired fingerprint segment from the third fingerprint segments,
wherein the third fingerprint segments include a third vehicle sub-trajectory and wireless signal information corresponding to the third vehicle sub-trajectory, and the third vehicle sub-trajectory is obtained by performing segmentation processing on the vehicle trajectory contained in the location fingerprint information in the location fingerprint database according to a preset distance.

In an embodiment of the present disclosure, the first preset time interval may be a periodic time set by the testers based on a large number of experimental results, which is not limited in the embodiments of the present disclosure.

With this optional implementation, the expired fingerprint segments in the location fingerprint database are deleted by periodic update processing, thereby improving the quality of the location fingerprint database.

In the embodiment of the present disclosure, the location fingerprint information is stored in the location fingerprint database. Since the second location information in the location fingerprint information is composed of many fingerprint segments, the location fingerprint database also has these fingerprint segments, among which some fingerprint segments have lower maturity degree(s). Therefore, in order to improve the quality of the location fingerprint database, as an optional implementation, the server device may also perform the following steps:
marking, according to a second preset time interval, one of the third fingerprint segments corresponding to a maturity degree smaller than a preset maturity degree as a lower-quality fingerprint segment, and deleting the lower-quality fingerprint segment from the third fingerprint segments.

In the embodiment of the present disclosure, the second preset time interval may be a periodic time set by the testers through a large number of experimental results, which is not limited in the embodiments of the present disclosure.

With this optional implementation, the lower-quality fingerprint segments in the location fingerprint database are deleted by periodic update processing, thereby improving the quality of the location fingerprint database.

In an embodiment of the present disclosure, it may be understood that the location fingerprint information is stored in the location fingerprint database. Since the second location information in the location fingerprint information is composed of many fingerprint segments, the location fingerprint database also has these fingerprint segments. Among these fingerprint segments, there may be a certain fingerprint segment that cannot completely match any other fingerprint segment (that is, the matching in terms of both the vehicle sub-trajectory and the wireless signal information corresponding to the vehicle sub-trajectory). Therefore, in order to improve the quality of the location fingerprint database, as an optional implementation, the server device may also perform the following steps:
determining, according to a third preset time interval, whether a second target fingerprint segment matches neither the third vehicle sub-trajectory of the third target fingerprint segment nor the wireless signal information corresponding to the third vehicle sub-trajectory,
wherein the second target fingerprint segment is any one of the third fingerprint segments, and the third target fingerprint segment is one of the third fingerprint segments other than the second target fingerprint segment;
if the second target fingerprint segment matches neither the third vehicle sub-trajectory of the third target fingerprint segment nor the wireless signal information corresponding to the third vehicle sub-trajectory, deleting the second target fingerprint segment from the third fingerprint segments;
if the second target fingerprint segment matches the third vehicle sub-trajectory of the third target fingerprint segment and/or the wireless signal information corresponding to the third vehicle sub-trajectory, performing second fusion processing on the second target fingerprint segment and the third target fingerprint segment.

In an embodiment of the present disclosure, the third preset time interval may be a periodic time set by the testers based on a large number of experimental results, which is not limited in the embodiments of the present disclosure. In addition, the first preset time interval, the second preset time interval, and the third preset time interval may be equal or unequal, which is not limited in the embodiment of the present disclosure.

In an embodiment of the present disclosure, the server device first determines whether a certain fingerprint segment in the location fingerprint database cannot match any other fingerprint segment. If yes, it indicates that this fingerprint segment conflicts with other fingerprint segments, and then the server device deletes this fingerprint segment from the fingerprint segments; if no, it indicates that the fingerprint segment can match one of other fingerprint segments, and then the server device fuses these two fingerprint segments .

For example, the location fingerprint information in the location fingerprint database includes location fingerprint information obtained after multiple times of storing. Assuming that the vehicle trajectories of the location fingerprint information obtained after multiple times of storing are E, F, and G, respectively, the vehicle sub-trajectories obtained by segmenting the vehicle trajectory E are e₁ and e₂, and the wireless signal information corresponding to the vehicle sub-trajectories *e₁* and *e₂* are *e'₁* and *e'₂;* the vehicle sub-trajectories obtained by segmenting the vehicle trajectory F according to the preset distance are *f₁* and *f*₂, and the wireless signal information corresponding to the vehicle sub-trajectoriesfi and *f₂ are f'₁* and *f'*₂; and the vehicle sub-trajectories obtained by segmenting the vehicle trajectory G according to the preset distance are *g₁* and *g₂,* and the wireless signal information corresponding to the vehicle sub-trajectories *g₁* and *g₂ are g'₁* and *g'₂,* then the third fingerprint segments are *e₁e'₁*, *e₂e'₂*, *f₁f*_{*1*,} *f₂f'₂, g₁g'₁,* and *g₂g'₂.* It is determined whether the second target fingerprint segment matches neither the third vehicle sub-trajectory of the third target fingerprint segment nor the wireless signal information corresponding to the third vehicle sub-trajectory. If yes, assuming that the second target fingerprint segment is *g₂g'₂* and the third target fingerprint segment is *e₁e'₁,* that is, *g₂* does not match *e₁*, and *g'₂* does not match *e'₁*, and thus *g₂g'₂* is deleted from the third fingerprint segments; if no, assuming that the second target fingerprint segment is *g₂g'₂* and the third target fingerprint segment is *e₁e'₁,* that is, *g₂* matches *e₁*, and/or *g'₂* matches with *e'₁, g₂g'₂* and *e₁e'₁* are fused.

With this optional implementation, for any one fingerprint segment in the location fingerprint database, the fingerprint segment is periodically matched with other fingerprint segments, if a matching fingerprint segment can be found, they are fused with each other; if no matching fingerprint segment can be found, this fingerprint segment is deleted, thereby improving the quality of the location fingerprint database.

As an optional implementation, said performing the second fusion processing on the second target fingerprint segment and the third target fingerprint segment if the second target fingerprint segment matches the third vehicle sub-trajectory of the third target fingerprint segment and/or the wireless signal information corresponding to the third vehicle sub-trajectory, includes:
if the second target fingerprint segment matches the third vehicle sub-trajectory of the third target fingerprint segment and/or the wireless signal information corresponding to the third vehicle sub-trajectory, performing weighted averaging on the third vehicle sub-trajectory in the second target fingerprint segment and the third vehicle sub-trajectory in the third target fingerprint segment to obtain a second fused vehicle sub-trajectory; performing weighted averaging on third wireless signal information and fourth wireless signal information to obtain second fused wireless signal information corresponding to the second fused vehicle sub-trajectory; comparing a maturity degree of the second target fingerprint segment with a maturity degree of the third target fingerprint segment; and marking the highest maturity degree as the second fused maturity degree,
wherein the third wireless signal information is wireless signal information corresponding to the third vehicle sub-trajectory contained in the second target fingerprint segment, and the fourth wireless signal information is wireless signal information corresponding to the third vehicle sub-trajectory contained in the third target fingerprint segment; and
fusing the second target fingerprint segment and the third target fingerprint segment according to the second fused vehicle sub-trajectory, the second fused wireless signal information, and the second fused maturity degree.

With this optional implementation, the quality of the location fingerprint database may be further improved.

Thus, with implementing the method as described in FIG. 2, the server device acquires the location fingerprint information transmitted by the vehicle-mounted terminal, and stores the location fingerprint information in the location fingerprint database corresponding to the target environment. Since the location fingerprint information associates the first location information outside the target environment with the second location information in the target environment, the terminal device or the server device may determine, based on the wireless signal information around the terminal device that is collected by the terminal device, the matching target location fingerprint information from the location fingerprint database corresponding to the target environment in the server device, when the terminal device enters the target environment from the outside of the target environment. The target location fingerprint information has associated the first positioning information outside the target environment with the second positioning information in the target environment, and thus the terminal device can directly utilize the map in the global coordinate system used outside the target environment for positioning, without re-switching to other programs or applications, thereby simplifying the positioning process and improving the positioning efficiency. In addition, the terminal device may be the vehicle-mounted terminal of the vehicle. In this case, when the vehicle enters the target environment from the outside of the target environment, there is no need to switch the positioning programs to position the vehicle, and the map such as Amap in the global coordinate system used for positioning outside the target environment can be directly used for positioning. In addition, the solutions of the present disclosure are not limited to the related data of a specified scenario provided by the third party, which, for example, is unnecessary to provide the map of the target environment and the matching positioning database thereof, and thus they may be generally applied to the most scenarios.

### Third Embodiment

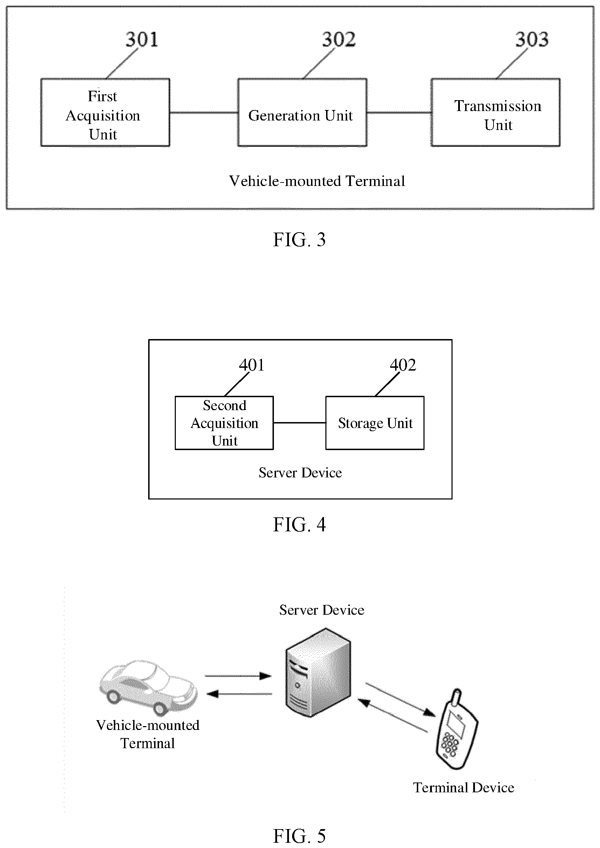

Reference may be made to FIG. 3, which is a schematic structural diagram of a vehicle-mounted terminal disclosed in an embodiment of the present disclosure. As shown in FIG. 3, the vehicle-mounted terminal may include a first acquisition unit 301, a generation unit 302, and a transmission unit 303.

The first acquisition unit 301 is configured to acquire first positioning information of a vehicle outside a target environment.

In an embodiment of the present disclosure, the first positioning information includes at least coordinate values of the vehicle outside the target environment, and the target environment is an environment in which a positioning signal strength is smaller than a preset threshold. The preset threshold may be a threshold set by the testers based on a large number of experimental results, which is not limited in the embodiments of the present disclosure. The coordinate values include a longitude, latitude, and altitude of the vehicle in the global coordinate system. The positioning signal may be a Global Positioning System (GPS) signal or a Beidou satellite positioning system signal, which is not limited in the embodiments of the present disclosure.

In an embodiment of the present disclosure, the first acquisition unit 301 may have a built-in positioning module, such as a global GPS module, a Beidou satellite positioning system. The embodiment of the present disclosure takes the GPS module as an example for illustration, but the present disclosure should not be limited thereto. The GPS module has higher integration sensitivity and lower power consumption, and it may track up to 20 satellites at the same time, and quickly position to achieve 1Hz navigation. Therefore, the first acquisition unit 301 may acquire the first positioning information of the vehicle outside the target environment through its built-in GPS module.

Further, in the process of that the first acquisition unit 301 acquires the first positioning information of the vehicle outside the target environment through its built-in GPS module, the vehicle-mounted terminal may also acquire third positioning information of the vehicle outside the target environment through an odometer and IMU of the vehicle, and fuse the first positioning information outside the target environment that is acquired by its built-in GPS module with the third positioning information acquired through the odometer and IMU of the vehicle using the Kalman filtering algorithm fusion method where a state propagation equation is provided by the odometer and IMU and a renewal equation of measurements is provided by the GPS module. With this optional implementation, the accuracy of the positioning information of the vehicle outside the target environment may be improved.

The generation unit 302 is configured to: acquire a vehicle trajectory of the vehicle in the target environment and wireless signal information in the target environment when the vehicle enters the target environment, and generate second positioning information of the vehicle according to the vehicle trajectory and the wireless signal information.

In an embodiment of the present disclosure, the vehicle trajectory carries coordinate values of the vehicle in the target environment, wherein the coordinate values include a longitude, latitude, and altitude of the vehicle in the global coordinate system. The wireless signal information includes at least an address of a wireless signal source and a signal strength of the wireless signal source, wherein the address of the wireless signal source may be a MAC address of a Wi-Fi signal and/or a MAC address of a Bluetooth signal. In an embodiment of the present disclosure, each wireless Access Point (AP) has one globally unique MAC address, which may be used to confirm the location of the wireless AP.

The generation unit 302 includes the following sub-units (not shown):
a first acquisition sub-unit configured to acquire the vehicle trajectory of the vehicle in the target environment through the odometer of the vehicle and the IMU of the vehicle, when the vehicle enters the target environment;
a collection sub-unit configured to collect the wireless signal information in the target environment; and
a generation sub-unit configured to: perform segmentation processing on the vehicle trajectory according to a preset distance to obtain a plurality of first vehicle sub-trajectories, and associate the first vehicle sub-trajectory with the wireless signal information collected on the first vehicle sub-trajectory to generate the second positioning information of the vehicle.

In an embodiment of the present disclosure, the preset distance may be a distance set by the testers based on a large number of experimental results, which is not limited in the embodiments of the present disclosure.

By segmenting the vehicle trajectory generated when the vehicle is driving in the target environment according to the preset distance, and by associating the obtained first vehicle sub-trajectory with the wireless signal information collected on the respective first vehicle sub-trajectory, it is ensured that each road section in the target environment is distinguishable and thus the matching accuracy is improved.

Further, in the process of that the first acquisition sub-unit acquires the vehicle trajectory of the vehicle in the target environment through the odometer of the vehicle and the IMU of the vehicle, a vehicle trajectory of the vehicle in the target environment may be acquired by a visual sensor of the vehicle, and the vehicle trajectory obtained through the odometer and IMU may be fused with the vehicle trajectory obtained through the visual sensor.

In an embodiment of the present disclosure, the visual sensor of the vehicle may include an image capture device, such as a camera, which is used to capture images of the vehicle during driving and obtain the vehicle trajectory of the vehicle in the target environment by analyzing the images.

Specifically, in an embodiment of the present disclosure, the first acquisition sub-unit may import the vehicle trajectory obtained through the odometer and IMU into an optimization process of a visual algorithm for the vehicle trajectory obtained through the visual sensor, so as to fuse the vehicle trajectory obtained through the odometer and IMU with the vehicle trajectory obtained through the visual sensor to improve the accuracy of the vehicle trajectory.

The vehicle trajectory of the vehicle in the target environment is acquired by the combination of the odometer, the IMU, and the visual sensor, which may improve the accuracy of the vehicle trajectory.

As an optional implementation, the vehicle-mounted terminal may further include a correction unit (not shown). Before the vehicle enters the target environment, the correction unit is configured to perform error calibration on the IMU to correct a drift error of the IMU, if it is detected that the vehicle is stationary before the vehicle enters the target environment.

With this optional implementation, the drift error of the IMU can be corrected, and the measurement accuracy of the IMU can be improved.

The transmission unit 303 is configured to: associate the first positioning information with the second positioning information according to the coordinate values of the vehicle outside the target environment and the coordinate values of the vehicle in the target environment to generate location fingerprint information, and transmit the location fingerprint information to a server device to trigger the server device to store the location fingerprint information in a location fingerprint database corresponding to the target environment, the location fingerprint database being used for a terminal device to achieve a positioning in a global coordinate system in response to entering the target environment from outside of the target environment.

In an embodiment of the present disclosure, a communication connection is established between the server device and the vehicle-mounted terminal, which is used for fused storing or directly storing the location fingerprint information transmitted by the vehicle-mounted terminal. The location fingerprint information is stored in the location fingerprint database corresponding to the target environment. The location fingerprint database may be provided for the terminal device to enable the positioning on the indoor map in the global coordinate system when entering the target environment from the outside of the target environment. The indoor map used comes from a map provider, such as Amap, Baidu Map, etc., which is not limited by the embodiments of the present disclosure.

In an embodiment of the present disclosure, the terminal device may be various devices, such as a mobile phone, a mobile tablet, a Personal Digital Assistant (PDA), a Mobile Internet Device (MID), that people are increasingly inseparable from in work and life, or a vehicle-mounted terminal of the vehicle.

As an optional implementation, the transmission unit 303 may include the following sub-units (not shown):
a second acquisition sub-unit configured to acquire first target coordinate values among the coordinate values of the vehicle outside the target environment, the first target coordinate values being the last coordinate values obtained before the vehicle enters the target environment;
a third acquisition unit configured to acquire second target coordinate values among the coordinate values of the vehicle in the target environment, the second target coordinate valued being first coordinate values obtained after the vehicle enters the target environment;
a fitting sub-unit configured to fit the first target coordinate value and the second target coordinate value to associate the first positioning information with the second positioning information, so as to generate the location fingerprint information; and
a transmission sub-unit configured to transmit the location fingerprint information to a server device to trigger the server device to store the location fingerprint information in a location fingerprint database corresponding to the target environment, the location fingerprint database being used for a terminal device to achieve a positioning in a global coordinate system in response to entering the target environment from outside of the target environment.

In an embodiment of the present disclosure, the first location information of the vehicle outside the target environment is associated with the second location information of the vehicle in the target environment by fitting the last coordinate value (obtained through GPS) before the vehicle enters the target environment and the first coordinate value (obtained through the odometer and IMU) after the vehicle enters the target environment. The fitting method may be fitted by a spline curve, such as a cubic B-spline, which is not limited in the embodiments of the present disclosure.

With this optional implementation, by associating the first positioning information of the vehicle outside the target environment with the second positioning information of the vehicle in the target environment, when the terminal device enters the target environment from the outside of the target environment, the second positioning information in the target environment is linked on map in the global coordinate system without re-switching to other programs or applications, which may simplify the positioning process and improve the positioning efficiency.

Thus, with implementing the vehicle-mounted terminal as described in FIG. 3, the first positioning information acquired by the vehicle-mounted terminal contains the coordinate values of the vehicle outside the target environment. When the vehicle enters the target environment from the outside of the target environment, the second positioning information acquired by the vehicle-mounted terminal contains the coordinate values of the vehicle in the target environment. The first positioning information and the second positioning information may be associated according to the coordinate values, and the generated location fingerprint information is transmitted to the server device for storage. Since the location fingerprint information in the location fingerprint database of the server device associates the first location information with the second location information, the terminal device or the server device may determine, based on the wireless signal information around the terminal device that is collected by the terminal device, the matching target location fingerprint information from the location fingerprint database corresponding to the target environment in the server device, when the terminal device enters the target environment from the outside of the target environment. The target location fingerprint information has associated the first positioning information outside the target environment with the second positioning information in the target environment, and thus the terminal device can directly utilize the map in the global coordinate system used outside the target environment for positioning, without re-switching to other programs or applications, thereby simplifying the positioning process and improving the positioning efficiency. In addition, the terminal device may be the vehicle-mounted terminal of the vehicle. In this case, when the vehicle enters the target environment from the outside of the target environment, there is no need to switch the positioning programs to position the vehicle, and thus the map such as Amap in the global coordinate system used for positioning outside the target environment can be directly used for positioning. In addition, the solutions of the present disclosure are not limited to the related data of a specified scenario provided by the third party, which, for example, is unnecessary to provide the map of the target environment and the matching positioning database thereof, and thus they may be generally applied to the most scenarios.

### Fourth Embodiment

Reference may be made to FIG. 4, which is a schematic structural diagram of a server device disclosed in an embodiment of the present disclosure. The server device as shown in FIG. 4 may include a second acquisition unit 401 and a storage unit 402.

The second acquisition unit 401 is configured to acquire location fingerprint information transmitted by a vehicle-mounted terminal.

In an embodiment of the present disclosure, the vehicle-mounted terminal acquires first positioning information of a vehicle outside a target environment, and the target environment is an environment in which a positioning signal strength is smaller than a preset threshold. The first positioning information includes at least coordinate values of the vehicle outside the target environment. The coordinate values include a longitude, latitude, and altitude of the vehicle in the global coordinate system. The positioning signal may be a Global Positioning System (GPS) signal or a Beidou satellite positioning system signal, which is not limited in the embodiments of the present disclosure. When the vehicle enters the target environment, the vehicle-mounted terminal acquires a vehicle trajectory of the vehicle in the target environment and wireless signal information in the target environment, and generates second positioning information of the vehicle according to the vehicle trajectory and the wireless signal information. The vehicle trajectory carries coordinate values of the vehicle in the target environment, and the wireless signal information includes at least an address of a wireless signal source and a signal strength of the wireless signal source. The vehicle-mounted terminal associates the first positioning information with the second positioning information according to the coordinate values of the vehicle outside the target environment and the coordinate values of the vehicle in the target environment, so as to generate the location fingerprint information

The storage unit 402 is configured to store the location fingerprint information in a location fingerprint database corresponding to the target environment. The location fingerprint database is provided for the terminal device to achieve a positioning in a global coordinate system in response to entering the target environment from outside of the target environment.

In an embodiment of the present disclosure, a communication connection is established between the server device and the vehicle-mounted terminal, which is used for fused storing or directly storing the location fingerprint information transmitted by the vehicle-mounted terminal. The location fingerprint information is stored in the location fingerprint database corresponding to the target environment. The location fingerprint database may be provided for the terminal device to enable the positioning on the indoor map in the global coordinate system when entering the target environment from the outside of the target environment. The indoor map used comes from a map provider, such as Amap, Baidu Map, etc., which is not limited by the embodiments of the present disclosure.

In an embodiment of the present disclosure, the terminal device may be various devices, such as a mobile phone, a mobile tablet, a Personal Digital Assistant (PDA), a Mobile Internet Device (MID), that people are increasingly inseparable from in work and life, or a vehicle-mounted terminal of the vehicle.

As an optional implementation, the storage unit 402 may include the following sub-units (not shown):
a determination sub-unit configured to determine whether the target environment is an unfamiliar environment;
a detection sub-unit configured to, if the target environment is not the unfamiliar environment, detect whether to-be-fused location fingerprint information matching the location fingerprint information exists in the location fingerprint database; and
a first fusion sub-unit configured to, if it is detected that the to-be-fused location fingerprint information matching the location fingerprint information exists in the location fingerprint database, perform a first fusion processing on the location fingerprint information and the to-be-fused location fingerprint information; and
a storage sub-unit configured to, if it is detected that the to-be-fused location fingerprint information matching the location fingerprint information does not exist in the location fingerprint database, store the location fingerprint information in the location fingerprint database.

With this optional implementation, the location fingerprint database is continuously updated by fused storing or directly storing the location fingerprint information that is acquired multiple times and transmitted by the vehicle-mounted terminal, thereby improving the timeliness of the location fingerprint database.

As an optional implementation, the storage unit 402 may further include a creation sub-unit (not shown). If it is determined that the target environment is the unfamiliar environment, the creation sub-unit is configured to create a new location fingerprint database in the server device, and stores the location fingerprint information in the new location fingerprint database. With this optional implementation, when the vehicle enters the target environment for the first time, the server device creates a new location fingerprint database, and stores the location fingerprint information transmitted by the vehicle terminal in the new location fingerprint database, thereby increasing a degree of completeness of the location fingerprint database.

As an optional implementation, the first fusion sub-unit may include the following modules (not shown):
a determination module configured to, if the to-be-fused location fingerprint information matching the location fingerprint information exists in the location fingerprint database, determine whether there is a first target fingerprint segment in first fingerprint segments that is incapable of matching any one of second fingerprint segments,
wherein the first fingerprint segments include a first vehicle sub-trajectory and wireless signal information corresponding to the first vehicle sub-trajectory; the first vehicle sub-trajectory is obtained by performing segmentation processing on the vehicle trajectory contained in the location fingerprint information according to a preset distance; the second fingerprint segments include a second vehicle sub-trajectory and wireless signal information corresponding to the second vehicle sub-trajectory; and the second vehicle sub-trajectory is obtained by performing segmentation processing on the vehicle trajectory contained in the to-be-fused location fingerprint information according to the preset distance,
a fusion module configured to, if the determination module determines that there is no first target fingerprint segment in the first fingerprint segments that is incapable of matching any one of second fingerprint segments: perform weighted averaging on the first vehicle sub-trajectory and a target vehicle sub-trajectory to obtain a first fused vehicle sub-trajectory; perform weighted averaging on first wireless signal information and second wireless signal information to obtain first fused wireless signal information corresponding to the first fused vehicle sub-trajectory; increase a count value of a maturity degree of the second fingerprint segment where the target vehicle sub-trajectory is located by a preset value to obtain a first fused maturity degree; and fuse the location fingerprint information and the to-be-fused location fingerprint information according to the first fused vehicle sub-trajectory, the first fused wireless signal information, and the first fused maturity degree,
wherein the target vehicle sub-trajectory is the second vehicle sub-trajectory that matches the first vehicle sub-trajectory; the first wireless signal information is the wireless signal information corresponding to the first vehicle sub-trajectory, and the second wireless signal information is the wireless signal information corresponding to the target vehicle sub-trajectory; and
an adding module configured to, if the determination module determines that there is a first target fingerprint segment in the first fingerprint segments that is incapable of matching match any one of second fingerprint segments, add the first target fingerprint segment to the to-be-fused location fingerprint information.

In the embodiments of the present disclosure, the preset value may be a value set by the testers based on a large number of experimental results, which is not limited in the embodiments of the present disclosure.

With this optional implementation, the timeliness of the location fingerprint database may be improved.

In an embodiment of the present disclosure, the location fingerprint information is stored in the location fingerprint database. Since the second positioning information in the location fingerprint information is composed of many fingerprint segments, the location fingerprint database also has these fingerprint segments, among which some fingerprint segments have not been updated for a long time. Therefore, in order to improve the quality of the location fingerprint database, the server device may also include the following units (not shown):
a recording unit configured to: record a timing, at which the location fingerprint information is stored in the location fingerprint database, as an update timing; or record a timing, at which, the first fusion processing is performed, as the update timing; and
a comparison unit configured to compare, according to a first preset time interval, the earliest update timing and the latest update timing among the update timings corresponding to third fingerprint segments to obtain a time difference;
a first determination unit configured to determine whether the time difference is greater than a preset time threshold;
a first deletion unit configured to, if the first determination unit determines that the time difference is greater than the preset time threshold, mark one of the third fingerprint segments corresponding to the earliest update timing as an expired fingerprint segment, and delete the expired fingerprint segment from the third fingerprint segments,
wherein the third fingerprint segments include a third vehicle sub-trajectory and wireless signal information corresponding to the third vehicle sub-trajectory, and the third vehicle sub-trajectory is obtained by performing segmentation processing on the vehicle trajectory contained in the location fingerprint information in the location fingerprint database according to the preset distance.

In an embodiment of the present disclosure, the first preset time interval may be a periodic time set by the testers based on a large number of experimental results, which is not limited in the embodiments of the present disclosure.

With this optional implementation, the expired fingerprint segments in the location fingerprint database are deleted through the periodic updating, which may improve the quality of the location fingerprint database.

In the embodiment of the present disclosure, the location fingerprint information is stored in the location fingerprint database. Since the second location information in the location fingerprint information is composed of many fingerprint segments, the location fingerprint database also has these fingerprint segments, among which some fingerprint segments have lower maturity degree(s). Therefore, in order to improve the quality of the location fingerprint database, the server device may further include the following units (not shown):
a second deletion unit configured to mark, according to a second preset time interval, one of the third fingerprint segments corresponding to a maturity degree smaller than a preset maturity degree as a lower-quality fingerprint segment, and delete the lower-quality fingerprint segment from the third fingerprint segments.

In the embodiment of the present disclosure, the second preset time interval may be a periodic time set by the testers based on a large number of experimental results, which is not limited in the embodiments of the present disclosure.

With this optional implementation, the lower-quality fingerprint segments in the location fingerprint database are deleted through periodic updating, which may improve the quality of the location fingerprint database.

In an embodiment of the present disclosure, it may be understood that the location fingerprint information is stored in the location fingerprint database. Since the second location information in the location fingerprint information is composed of many fingerprint segments, the location fingerprint database also has these fingerprint segments. In these fingerprint segments, there may be a certain fingerprint segment that cannot completely match any one of other fingerprint segments (that is, matching in terms of both the vehicle sub-trajectory and the wireless signal information corresponding to the vehicle sub-trajectory). Therefore, in order to improve the quality of the location fingerprint database, the server device may further include the following units (not shown):
a second determination unit configured to, according to a third preset time interval, determine whether a second target fingerprint segment matches neither the third vehicle sub-trajectory of the third target fingerprint segment nor the wireless signal information corresponding to the third vehicle sub-trajectory, wherein the second target fingerprint segment is any one of the third fingerprint segments, and the third target fingerprint segment is any one of the third fingerprint segments other than the second target fingerprint segment;
a third deletion unit configured to, if the second determination unit determines that the second target fingerprint segment matches neither the third vehicle sub-trajectory of the third target fingerprint segment nor the wireless signal information corresponding to the third vehicle sub-trajectory, delete the second target fingerprint segment from the third fingerprint segments;
a fusion unit configured to, if the second determination unit determines that the second target fingerprint segment matches the third vehicle sub-trajectory of the third target fingerprint segment and/or the wireless signal information corresponding to the third vehicle sub-trajectory, perform second fusion processing on the second target fingerprint segment and the third target fingerprint segment.

In an embodiment of the present disclosure, the third preset time interval may be a periodic time set by the testers based on a large number of experimental results, which is not limited in the embodiments of the present disclosure. In addition, the first preset time interval, the second preset time interval, and the third preset time interval may be equal or not equal, which is not limited in the embodiment of the present disclosure.

With this optional implementation, any fingerprint segment in the location fingerprint database is periodically matched with other fingerprint segments, if a matching fingerprint segment can be found, they are fused with each other; if a matching fingerprint segment cannot be found, the fingerprint segment is deleted, which may improve the quality of the location fingerprint database.

As an optional implementation, the fusion unit may include the following sub-units (not shown):
a processing sub-unit configured to, if the second determination unit determines that the second target fingerprint segment matches the third vehicle sub-trajectory of the third target fingerprint segment and/or the wireless signal information corresponding to the third vehicle sub-trajectory, perform weighted averaging on the third vehicle sub-trajectory in the second target fingerprint segment and the third vehicle sub-trajectory in the third target fingerprint segment to obtain a second fused vehicle sub-trajectory; perform weighted averaging on third wireless signal information and fourth wireless signal information to obtain second fused wireless signal information corresponding to the second fused vehicle sub-trajectory; compare a maturity degree of the second target fingerprint segment with a maturity degree of the third target fingerprint segment; and mark the highest maturity degree as the second fused maturity degree,
wherein the third wireless signal information is wireless signal information corresponding to the third vehicle sub-trajectory contained in the second target fingerprint segment, and the fourth wireless signal information is wireless signal information corresponding to the third vehicle sub-trajectory contained in the third target fingerprint segment; and
a second fusion sub-unit configured to fuse the second target fingerprint segment and the third target fingerprint segment according to the second fused vehicle sub-trajectory, the second fused wireless signal information, and the second fused maturity degree.

With this optional implementation, the quality of the location fingerprint database may be further improved.

Thus, with implementing the server device as described in FIG. 4, the server device acquires location fingerprint information transmitted by a vehicle-mounted terminal, and stores the location fingerprint information in a location fingerprint database corresponding to the target environment. Since the location fingerprint information associates the first location information outside the target environment with the second location information in the target environment, the terminal device or the server device may determine, based on the wireless signal information around the terminal device that is collected by the terminal device, the matching target location fingerprint information from the location fingerprint database corresponding to the target environment in the server device, when the terminal device enters the target environment from the outside of the target environment. The target location fingerprint information has associated the first positioning information outside the target environment with the second positioning information in the target environment, and thus the terminal device can directly utilize the map in the global coordinate system used outside the target environment for positioning, without re-switching to other programs or applications, thereby simplifying the positioning process and improving the positioning efficiency. In addition, the terminal device may be the vehicle-mounted terminal of the vehicle. In this case, when the vehicle enters the target environment from the outside of the target environment, there is no need to switch the positioning programs to position the vehicle. The map, such as Amap, in the global coordinate system used for positioning outside the target environment can be directly used for positioning. In addition, the solutions of the present disclosure are not limited to the related data of a specified scenario provided by the third party, which, for example, is unnecessary to provide the map of the target environment and the matching positioning database, and thus they may be generally applied to the most scenarios.

### Fifth Embodiment

Reference is now made to FIG. 5, which is a schematic diagram of a positioning system disclosed in an embodiment of the present disclosure. As shown in FIG. 5, the positioning system may include a vehicle-mounted terminal, a server device, and a terminal device.

Optionally, the terminal device may be a vehicle-mounted terminal, which is not limited by the embodiments of the present disclosure.

The terminal device is configured to:
collect wireless signal information around the terminal device when the terminal device enters the target environment from outside the target environment, the wireless signal information including at least the address of the wireless signal source and the signal strength of the wireless signal source;
transmit, to the server device, a positioning request carrying the wireless signal information around the terminal device in such a manner that the server device determines, from the location fingerprint database corresponding to the target environment, target location fingerprint information that matches the wireless signal information around the terminal device, and feedbacks the target location fingerprint information to the terminal device; and
achieve the positioning in the global coordinate system according to the target location fingerprint information transmitted by the server device.

Alternatively, the terminal device is configured to:
collect wireless signal information around the terminal device when the terminal device enters the target environment from the outside of the target environment, the wireless signal information including at least the address of the wireless signal source and the signal strength of the wireless signal source;
transmit, to the server device, a positioning request carrying the wireless signal information around the terminal device for accessing the location fingerprint database corresponding to the target environment in the server device; and determine, from the location fingerprint database corresponding to the target environment, the target location fingerprint information that matches the wireless signal information around the terminal device; and
achieve the positioning in the global coordinate system according to the target location fingerprint information.

### Sixth Embodiment

An embodiment of the present disclosure discloses a vehicle. The vehicle may include the vehicle-mounted terminal disclosed in the embodiments of the present disclosure.

### Seventh Embodiment

An embodiment of the present disclosure discloses a computer readable storage medium. The computer readable storage medium stores a computer program, which is operable to cause the computer to perform any of the methods of creating positioning information as shown in FIG. 1 and FIG. 2.

An embodiment of the present disclosure discloses a computer program product. The computer program product includes a non-transitory computer readable storage medium storing a computer program, which is operable to cause the computer to perform any of the methods of creating positioning information as shown in FIG. 1 and FIG. 2.

An embodiment of the present disclosure discloses an application publishing platform is also provided according to an embodiment of the present disclosure. The application publishing platform is configured to publish a computer program product, and the computer program product, when executed on a computer, causes the computer to perform a part or all of the steps in the method according to any of the above method embodiments.

It should be understood that "one embodiment" or "an embodiment" mentioned throughout the specification means that specific features, structures, or characteristics related to the embodiment are included in at least one embodiment of the present disclosure. Therefore, "in one embodiment" or "in an embodiment" throughout the specification do not necessarily refer to the same embodiment. In addition, these specific features, structures or characteristics can be combined in one or more embodiments in any suitable manner. Those skilled in the art should also know that the embodiments described in the specification are optional embodiments, and the actions and modules involved are not necessarily required by the present disclosure.

It can be appreciated that, in various embodiments of the present disclosure, the values of the sequence numbers of the respective processes above do not mean a necessary order in which the processes are performed. The order in which the processes are performed depends on their functions and internal logics. The implementation of the embodiments of the present disclosure is not limited to any exemplary order.

The units described above as separate components may or may not be physically separated, and the components illustrated as units may or may not be physical units, i.e., they may be collocated or distributed on multiple network units. Some or all of the units may be selected according to actual needs to achieve the purpose of the technical solutions of the embodiments.

In addition, the functional units in the embodiments of the present disclosure may be integrated into one processing unit, or each unit may physically exist alone, or two or more units may be integrated into one unit. The above-mentioned integrated unit can be implemented in the form of hardware or software functional unit.

If the aforementioned integrated unit is implemented in the form of a software functional unit sold or used as an independent product, it can be stored in a computer-accessible memory. Based on this understanding, the essence of the technical solutions of the present disclosure, or the part that contributes to the existing technology, or all or part of the technical solutions can be embodied in the form of a software product, and the computer software product is stored in a memory, including several requests to cause a computer device (which may be a personal computer, a server or a network device, etc., specifically a processor in a computer device) to execute some or all of the steps of the above methods of the various embodiments of the present disclosure.

In the embodiments provided by the present disclosure, it should be understood that "B corresponding to A" means that B is associated with A, and B can be determined according to A. However, it should also be understood that determining B according to A does not mean that B can be only determined according to A, but means that B can be determined according to A and/or other information.

In the various embodiments of the present disclosure, it should be understood that the meaning of "A and/or B" covers that A and B exist separately, or A and B exist simultaneously.

Those skilled in the art can understand that all or part of the steps in the various methods of the above-mentioned embodiments can be performed by a program instructing relevant hardware. The program can be stored in a computer-readable storage medium. The storage medium includes Read-Only Memory (ROM), Random Access Memory (RAM), Programmable Read-only Memory (PROM), Erasable Programmable Read Only Memory (EPROM), One-time Programmable Read-Only Memory (OTPROM), Electronically-Erasable Programmable Read-Only Memory (EEPROM), Compact Disc Read-Only Memory (CD-ROM) or other optical disk storage, magnetic disk storage, tape storage, or any other computer-readable medium that can be used to carry or store data.

## Claims

1. A positioning information creation method, comprising:
acquiring (101) first positioning information of a vehicle outside a target environment, the first positioning information comprising at least coordinate values of the vehicle outside the target environment, and the target environment being an environment in which a positioning signal strength is smaller than a preset threshold;
acquiring (102) a vehicle trajectory of the vehicle in the target environment and wireless signal information in the target environment in response to the vehicle entering the target environment, and generating second positioning information of the vehicle according to the vehicle trajectory and the wireless signal information, wherein the vehicle trajectory carries coordinate values of the vehicle in the target environment, and the wireless signal information comprises at least an address of a wireless signal source and a signal strength of the wireless signal source; and
associating (103) the first positioning information with the second positioning information according to the coordinate values of the vehicle outside the target environment and the coordinate values of the vehicle in the target environment to generate location fingerprint information, and transmitting the location fingerprint information to a server device to trigger the server device to store the location fingerprint information in a location fingerprint database corresponding to the target environment, the location fingerprint database being provided for a terminal device to achieve positioning in a global coordinate system in response to entering the target environment from outside of the target environment, **characterized in that**,
said acquiring (102) the vehicle trajectory of the vehicle in the target environment and the wireless signal information in the target environment in response to the vehicle entering the target environment and said generating the second positioning information of the vehicle according to the vehicle trajectory and the wireless signal information comprise:
acquiring, in response to the vehicle entering the target environment, the vehicle trajectory of the vehicle in the target environment through an odometer of the vehicle and an Inertial Measurement Unit (IMU) of the vehicle;
collecting the wireless signal information in the target environment; and
performing segmentation processing on the vehicle trajectory according to a preset distance to obtain a plurality of first vehicle sub-trajectories, and associating the plurality of first vehicle sub-trajectories with the wireless signal information collected on the plurality of first vehicle sub-trajectories to generate the second positioning information of the vehicle.

2. The method according to claim 1, further comprising:
performing an error calibration on the IMU when it is detected that the vehicle is stationary, to correct a drift error of the IMU, before the vehicle enters the target environment.

3. The method according to claim 2, wherein said associating (103) the first positioning information with the second positioning information according to the coordinate values of the vehicle outside the target environment and the coordinate values of the vehicle in the target environment to generate location fingerprint information comprises:
acquiring first target coordinate values among the coordinate values of the vehicle outside the target environment, the first target coordinate values being the last coordinate values obtained before the vehicle enters the target environment;
acquiring second target coordinate values among the coordinate values of the vehicle in the target environment, the second target coordinate values being the first coordinate values obtained after the vehicle enters the target environment; and
fitting the first target coordinate values and the second target coordinate values to associate the first positioning information with the second positioning information to generate the location fingerprint information.

4. A positioning information creation method, comprising:
acquiring (201) location fingerprint information transmitted by a vehicle-mounted terminal, and generating the location fingerprint information by: the vehicle-mounted terminal acquiring first positioning information of a vehicle outside a target environment, the first positioning information comprising at least coordinate values of the vehicle outside the target environment, and the target environment being an environment in which a positioning signal strength is smaller than a preset threshold; and in response to the vehicle entering the target environment, the vehicle-mounted terminal acquiring a vehicle trajectory of the vehicle in the target environment and wireless signal information in the target environment, and generating second positioning information of the vehicle according to the vehicle trajectory and the wireless signal information, the vehicle trajectory carrying coordinate values of the vehicle in the target environment, and the wireless signal information comprising at least an address of a wireless signal source and a signal strength of the wireless signal source; and the vehicle-mounted terminal associating the first positioning information with the second positioning information according to the coordinate values of the vehicle outside the target environment and the coordinate values of the vehicle in the target environment to generate the location fingerprint information; and
storing (202) the location fingerprint information in a location fingerprint database corresponding to the target environment, the location fingerprint database being provided for the terminal device to achieve a positioning in a global coordinate system in response to entering the target environment from outside of the target environment, **characterized in that**, the vehicle-mounted terminal acquiring the vehicle trajectory of the vehicle in the target environment and the wireless signal information in the target environment, and generating the second positioning information of the vehicle according to the vehicle trajectory and the wireless signal information comprises:
the vehicle-mounted terminal acquiring, in response to the vehicle entering the target environment, the vehicle trajectory of the vehicle in the target environment through an odometer of the vehicle and an Inertial Measurement Unit (IMU) of the vehicle;
the vehicle-mounted terminal collecting the wireless signal information in the target environment; and
the vehicle-mounted terminal performing segmentation processing on the vehicle trajectory according to a preset distance to obtain a plurality of first vehicle sub-trajectories, and associating the plurality of first vehicle sub-trajectories with the wireless signal information collected on the plurality of first vehicle sub-trajectories to generate the second positioning information of the vehicle.

5. The method according to claim 4, wherein said storing (202) the location fingerprint information in the location fingerprint database corresponding to the target environment comprises:
determining whether the target environment is an unfamiliar environment;
when the target environment is not the unfamiliar environment, detecting whether to-be-fused location fingerprint information matching the location fingerprint information exists in the location fingerprint database; and
when the to-be-fused location fingerprint information matching the location fingerprint information exists in the location fingerprint database, performing first fusion processing on the location fingerprint information and the to-be-fused location fingerprint information;
when the to-be-fused location fingerprint information does not exit, storing the location fingerprint information in the location fingerprint database.

6. The method according to claim 5, further comprising:
when the target environment is the unfamiliar environment, creating a new location fingerprint database in a server device, and storing the location fingerprint information in the new location fingerprint database.

7. The method according to claim 5 or 6, wherein said performing the first fusion processing on the location fingerprint information and the to-be-fused location fingerprint information when the to-be-fused location fingerprint information matching the location fingerprint information exists in the location fingerprint database comprises:
when the to-be-fused location fingerprint information matching the location fingerprint information exists in the location fingerprint database, determining whether there is a first target fingerprint segment in first fingerprint segments that is incapable of matching any one of second fingerprint segments,
wherein the first fingerprint segments comprise a first vehicle sub-trajectory and wireless signal information corresponding to the first vehicle sub-trajectory; the first vehicle sub-trajectory is obtained by performing segmentation processing on the vehicle trajectory contained in the location fingerprint information according to a preset distance; the second fingerprint segments comprise a second vehicle sub-trajectory and wireless signal information corresponding to the second vehicle sub-trajectory; and the second vehicle sub-trajectory is obtained by performing segmentation processing on the vehicle trajectory contained in the to-be-fused location fingerprint information according to the preset distance,
when there is no first target fingerprint segment in first fingerprint segments that is incapable of matching any one of second fingerprint segments, performing weighted averaging on the first vehicle sub-trajectory and a target vehicle sub-trajectory to obtain a first fused vehicle sub-trajectory; performing weighted averaging on first wireless signal information and second wireless signal information to obtain first fused wireless signal information corresponding to the first fused vehicle sub-trajectory; increasing a count value of a maturity degree of the second fingerprint segment, where the target vehicle sub-trajectory is located, by a preset value to obtain a first fused maturity degree; and fusing the location fingerprint information and the to-be-fused location fingerprint information according to the first fused vehicle sub-trajectory, the first fused wireless signal information, and the first fused maturity degree,
wherein the target vehicle sub-trajectory is the second vehicle sub-trajectory that matches the first vehicle sub-trajectory; the first wireless signal information is the wireless signal information corresponding to the first vehicle sub-trajectory, and the second wireless signal information is wireless signal information corresponding to the target vehicle sub-trajectory;
when there is a first target fingerprint segment in first fingerprint segments that is incapable of matching any one of second fingerprint segments, adding the first target fingerprint segment to the to-be-fused location fingerprint information.

8. A vehicle-mounted terminal, comprising:
a first acquisition unit (301) configured to acquire first positioning information of a vehicle outside a target environment, the first positioning information comprising at least coordinate values of the vehicle outside the target environment, and the target environment being an environment in which a positioning signal strength is smaller than a preset threshold;
a generation unit (302) configured to: acquire a vehicle trajectory of the vehicle in the target environment and wireless signal information in the target environment in response to the vehicle entering the target environment, and generate second positioning information of the vehicle according to the vehicle trajectory and the wireless signal information, wherein the vehicle trajectory carries coordinate values of the vehicle in the target environment, and the wireless signal information comprises at least an address of a wireless signal source and a signal strength of the wireless signal source; and
a transmission unit (303) configured to: associate the first positioning information with the second positioning information according to the coordinate values of the vehicle outside the target environment and the coordinate values of the vehicle in the target environment to generate location fingerprint information, and transmit the location fingerprint information to a server device to trigger the server device to store the location fingerprint information in a location fingerprint database corresponding to the target environment, the location fingerprint database being provided for a terminal device to achieve a positioning in a global coordinate system in response to entering the target environment from outside of the target environment, **characterized in that**,
the generation unit is further configured to:
acquire, in response to the vehicle entering the target environment, the vehicle trajectory of the vehicle in the target environment through an odometer of the vehicle and an Inertial Measurement Unit (IMU) of the vehicle;
collect the wireless signal information in the target environment; and
perform segmentation processing on the vehicle trajectory according to a preset distance to obtain a plurality of first vehicle sub-trajectories, and associate the plurality of first vehicle sub-trajectories with the wireless signal information collected on the plurality of first vehicle sub-trajectories to generate the second positioning information of the vehicle.

9. A vehicle, comprising the vehicle-mounted terminal according to claim 8.

## Patentansprüche

1. Verfahren für eine Erstellung von Positionierungsinformationen, umfassend:
Erfassen (101) erster Positionierungsinformationen eines Fahrzeugs außerhalb einer Zielumgebung, die ersten Positionierungsinformationen umfassend mindestens Koordinatenwerte des Fahrzeugs außerhalb der Zielumgebung, und wobei die Zielumgebung eine Umgebung ist, in der eine Positionierungssignalstärke kleiner als ein voreingestellter Schwellenwert ist;
Erfassen (102) einer Fahrzeugtrajektorie des Fahrzeugs in der Zielumgebung und Informationen eines drahtlosen Signals in der Zielumgebung als Reaktion darauf, dass das Fahrzeug in die Zielumgebung eintritt, und Erzeugen zweiter Positionierungsinformationen des Fahrzeugs gemäß der Fahrzeugtrajektorie und der Informationen des drahtlosen Signals, wobei die Fahrzeugtrajektorie Koordinatenwerte des Fahrzeugs in der Zielumgebung trägt, und die Informationen des drahtlosen Signals mindestens eine Adresse einer Quelle des drahtlosen Signals und eine Signalstärke der Quelle des drahtlosen Signals umfassen; und
Zuordnen (103) der ersten Positionierungsinformationen zu den zweiten Positionierungsinformationen gemäß den Koordinatenwerten des Fahrzeugs außerhalb der Zielumgebung und den Koordinatenwerten des Fahrzeugs in der Zielumgebung, um Standortfingerabdruckinformationen zu erzeugen, und Übertragen der Standortfingerabdruckinformationen an eine Servervorrichtung, um die Servervorrichtung auszulösen, um die Standortfingerabdruckinformationen in einer Standortfingerabdruckdatenbank zu speichern, die der Zielumgebung entspricht, wobei die Standortfingerabdruckdatenbank für eine Endgerätevorrichtung bereitgestellt wird, um eine Positionierung in einem globalen Koordinatensystem als Reaktion auf ein Eintreten in die Zielumgebung von außerhalb der Zielumgebung zu erreichen, **dadurch gekennzeichnet, dass**,
das Erfassen (102) der Fahrzeugtrajektorie des Fahrzeugs in der Zielumgebung und der Informationen des drahtlosen Signals in der Zielumgebung als Reaktion darauf, dass das Fahrzeug in die Zielumgebung eintritt, und das Erzeugen der zweiten Positionierungsinformationen des Fahrzeugs gemäß der Fahrzeugtrajektorie und der Informationen des drahtlosen Signals umfassen:
Erfassen, als Reaktion darauf, dass das Fahrzeug in die Zielumgebung eintritt, der Fahrzeugtrajektorie des Fahrzeugs in der Zielumgebung durch einen Kilometerzähler des Fahrzeugs und einer inertialen Messeinheit (IME) des Fahrzeugs;
Sammeln der Informationen des drahtlosen Signals in der Zielumgebung; und
Durchführen einer Segmentierungsverarbeitung auf der Fahrzeugtrajektorie gemäß einem voreingestellten Abstand, um eine Vielzahl von ersten Fahrzeugteiltrajektorien zu erhalten, und Zuordnen der Vielzahl von ersten Fahrzeugteiltrajektorien zu den Informationen des drahtlosen Signals, die auf der Vielzahl von ersten Fahrzeugteiltrajektorien gesammelt werden, um die zweiten Positionierungsinformationen des Fahrzeugs zu erzeugen.

2. Verfahren nach Anspruch 1, ferner umfassend:
Durchführen einer Fehlerkalibrierung an der IME, wenn erkannt wird, dass das Fahrzeug stationär ist, um einen Driftfehler der IME zu korrigieren, bevor das Fahrzeug in die Zielumgebung eintritt.

3. Verfahren nach Anspruch 2, wobei das Zuordnen (103) der ersten Positionierungsinformationen zu den zweiten Positionierungsinformationen gemäß den Koordinatenwerten des Fahrzeugs außerhalb der Zielumgebung und den Koordinatenwerten des Fahrzeugs in der Zielumgebung, um Standortfingerabdruckinformationen zu erzeugen, umfasst:
Erfassen erster Zielkoordinatenwerte unter den Koordinatenwerten des Fahrzeugs außerhalb der Zielumgebung, wobei die ersten Zielkoordinatenwerte die letzten Koordinatenwerte sind, die erhalten werden, bevor das Fahrzeug in die Zielumgebung eintritt;
Erfassen zweiter Zielkoordinatenwerte unter den Koordinatenwerten des Fahrzeugs in der Zielumgebung, wobei die zweiten Zielkoordinatenwerte die ersten Koordinatenwerte sind, die erhalten werden, nachdem das Fahrzeug in die Zielumgebung eintritt; und
Anpassen der ersten Zielkoordinatenwerte und der zweiten Zielkoordinatenwerte, um die ersten Positionierungsinformationen mit den zweiten Positionierungsinformationen zu verknüpfen, um die Standortfingerabdruckinformationen zu erzeugen.

4. Verfahren für die Erstellung von Positionierungsinformationen, umfassend:
Erfassen (201) von Standortfingerabdruckinformationen, die durch ein fahrzeugmontiertes Endgerät übertragen werden, und Erzeugen der Standortfingerabdruckinformationen durch: das fahrzeugmontierte Endgerät, das erste Positionierungsinformationen eines Fahrzeugs außerhalb einer Zielumgebung erfasst, die ersten Positionierungsinformationen umfassend mindestens Koordinatenwerte des Fahrzeugs außerhalb der Zielumgebung, und wobei die Zielumgebung eine Umgebung ist, in der eine Positionierungssignalstärke kleiner als ein voreingestellter Schwellenwert ist; und als Reaktion darauf, dass das Fahrzeug in die Zielumgebung eintritt, das fahrzeugmontierte Endgerät eine Fahrzeugtrajektorie des Fahrzeugs in der Zielumgebung und Informationen des drahtlosen Signals in der Zielumgebung erfasst und zweite Positionierungsinformationen des Fahrzeugs gemäß der Fahrzeugtrajektorie und den Informationen des drahtlosen Signals erzeugt, wobei die Fahrzeugtrajektorie Koordinatenwerte des Fahrzeugs in der Zielumgebung trägt, und die Informationen des drahtlosen Signals umfassend mindestens eine Adresse einer Quelle des drahtlosen Signals und eine Signalstärke der Quelle des drahtlosen Signals; und
wobei das fahrzeugmontierte Endgerät die ersten Positionierungsinformationen mit den zweiten Positionierungsinformationen gemäß den Koordinatenwerten des Fahrzeugs außerhalb der Zielumgebung und den Koordinatenwerten des Fahrzeugs in der Zielumgebung verknüpft, um die Standortfingerabdruckinformationen zu erzeugen; und
Speichern (202) der Standortfingerabdruckinformationen in einer Standortfingerabdruckdatenbank, die der Zielumgebung entspricht, wobei die Standortfingerabdruckdatenbank für die Endgerätevorrichtung bereitgestellt wird, um eine Positionierung in einem globalen Koordinatensystem als Reaktion auf das Eintreten in die Zielumgebung von außerhalb der Zielumgebung zu erreichen, **dadurch gekennzeichnet, dass** das fahrzeugmontierte Endgerät, das die Fahrzeugtrajektorie des Fahrzeugs in der Zielumgebung und die Informationen des drahtlosen Signals in der Zielumgebung erfasst und die zweiten Positionierungsinformationen des Fahrzeugs gemäß der Fahrzeugtrajektorie und die Informationen des drahtlosen Signals erzeugt, umfasst:
das fahrzeugmontierte Endgerät als Reaktion darauf, dass das Fahrzeug in die Zielumgebung eintritt, die Fahrzeugtrajektorie des Fahrzeugs in der Zielumgebung durch einen Kilometerzähler des Fahrzeugs und eine inertiale Messeinheit (IME) des Fahrzeugs erfasst;
wobei das fahrzeugmontierte Endgerät die Informationen des drahtlosen Signals in der Zielumgebung sammelt; und
wobei das fahrzeugmontierte Endgerät die Segmentierungsverarbeitung an der Fahrzeugtrajektorie gemäß einem voreingestellten Abstand durchführt, um eine Vielzahl von ersten Fahrzeugteiltrajektorien zu erhalten, und die Vielzahl von ersten Fahrzeugteiltrajektorien zu den Informationen des drahtlosen Signals zuordnet, die auf der Vielzahl von ersten Fahrzeugteiltrajektorien gesammelt werden, um die zweiten Positionierungsinformationen des Fahrzeugs zu erzeugen.

5. Verfahren nach Anspruch 4, wobei das Speichern (202) der Standortfingerabdruckinformationen in der Standortfingerabdruckdatenbank, die der Zielumgebung entspricht, umfasst:
Bestimmen, ob die Zielumgebung eine unbekannte Umgebung ist;
wenn die Zielumgebung nicht die unbekannte Umgebung ist, Erkennen, ob zu fusionierenden Standortfingerabdruckinformationen, die mit den Standortfingerabdruckinformationen übereinstimmen, in der Standortfingerabdruckdatenbank vorhanden sind; und
wenn die zu fusionierenden Standortfingerabdruckinformationen, die mit den Standortfingerabdruckinformationen übereinstimmen, in der Standortfingerabdruckdatenbank vorhanden sind, Durchführen einer ersten Fusionsverarbeitung an den Standortfingerabdruckinformationen und den zu fusionierenden Standortfingerabdruckinformationen;
wenn die zu fusionierenden Standortfingerabdruckinformationen nicht verlassen werden, Speichern der Standortfingerabdruckinformationen in der Standortfingerabdruckdatenbank.

6. Verfahren nach Anspruch 5, ferner umfassend:
wenn die Zielumgebung die unbekannte Umgebung ist, Erstellen einer neuen Standortfingerabdruckdatenbank in einer Servervorrichtung und Speichern der Standortfingerabdruckinformationen in der neuen Position der Fingerabdruckdatenbank.

7. Verfahren nach Anspruch 5 oder 6, wobei das Durchführen der ersten Fusionsverarbeitung an den Standortfingerabdruckinformationen und den zu fusionierenden Standortfingerabdruckinformationen, wenn die zu fusionierenden Standortfingerabdruckinformationen, die mit den Standortfingerabdruckinformationen übereinstimmen, in der Standortfingerabdruckdatenbank vorhanden sind, umfasst:
wenn die zu fusionierenden Standortfingerabdruckinformationen, die mit den Standortfingerabdruckinformationen übereinstimmen, in der Standortfingerabdruckdatenbank vorhanden sind, Bestimmen, ob ein erstes Zielfingerabdrucksegment in ersten Fingerabdrucksegmenten vorhanden ist, das nicht in der Lage ist, mit einem beliebigen der zweiten Fingerabdrucksegmente übereinzustimmen,
wobei die ersten Fingerabdrucksegmente eine erste Fahrzeugteiltrajektorie und Informationen des drahtlosen Signals umfassen, die der ersten Fahrzeugteiltrajektorie entsprechen; die erste Fahrzeugteiltrajektorie durch Durchführen einer Segmentierungsverarbeitung an der Fahrzeugtrajektorie erhalten wird, die in den Standortfingerabdruckinformationen gemäß einem voreingestellten Abstand enthalten ist; die zweiten Fingerabdrucksegmente eine zweite Fahrzeugteiltrajektorie und Informationen des drahtlosen Signals umfassen, die der zweiten Fahrzeugteiltrajektorie entsprechen; und die zweite Fahrzeugteiltrajektorie durch Durchführen einer Segmentierungsverarbeitung an der Fahrzeugtrajektorie erhalten wird, die in den zu fusionierenden Standortfingerabdruckinformationen gemäß dem voreingestellten Abstand enthalten ist,
wenn es kein erstes Zielfingerabdrucksegment in ersten Fingerabdrucksegmenten gibt, das nicht in der Lage ist, mit einem beliebigen der zweiten Fingerabdrucksegmente übereinzustimmen, Durchführen einer gewichteten Mittelung an der ersten Fahrzeugteiltrajektorie und einer Zielfahrzeugteiltrajektorie, um eine erste fusionierte Fahrzeugteiltrajektorie zu erhalten; Durchführen der gewichteten Mittelung an ersten Informationen des drahtlosen Signals und zweiten Informationen des drahtlosen Signals, um erste fusionierte Informationen des drahtlosen Signals zu erhalten, die der ersten verschmolzenen Fahrzeugteiltrajektorie entsprechen; Erhöhen eines Zählwerts eines Reifegrads des zweiten Fingerabdrucksegments, wobei sich die Zielfahrzeugteiltrajektorie befindet, durch einen voreingestellten Wert, um einen ersten fusionierten Reifegrad zu erhalten; und Fusionieren der Standortfingerabdruckinformationen und der zu fusionierenden Standortfingerabdruckinformationen gemäß der ersten verschmolzenen Fahrzeugteiltrajektorie, der ersten fusionierten Informationen des drahtlosen Signals und dem ersten fusionierten Reifegrad,
wobei die Zielfahrzeugteiltrajektorie die zweite Fahrzeugteiltrajektorie ist, die mit der ersten Fahrzeugteiltrajektorie übereinstimmt; die ersten Informationen des drahtlosen Signals die Informationen des drahtlosen Signals sind, die der ersten Fahrzeugteiltrajektorie entsprechen, und die zweiten Informationen des drahtlosen Signals Informationen des drahtlosen Signals sind, die der Zielfahrzeugteiltrajektorie entsprechen;
wenn es ein erstes Zielfingerabdrucksegment in ersten Fingerabdrucksegmenten gibt, das nicht in der Lage ist, mit einem der zweiten Fingerabdrucksegmente übereinzustimmen, Hinzufügen des ersten Zielfingerabdrucksegments zu den zu fusionierenden Standortfingerabdruckinformationen.

8. Fahrzeugmontiertes Endgerät, umfassend:
eine erste Erfassungseinheit (301), die konfiguriert ist, um erste Positionierungsinformationen eines Fahrzeugs außerhalb einer Zielumgebung zu erfassen, die ersten Positionierungsinformationen umfassend mindestens Koordinatenwerte des Fahrzeugs außerhalb der Zielumgebung, und wobei die Zielumgebung eine Umgebung ist, in der eine Positionierungssignalstärke kleiner als ein voreingestellter Schwellenwert ist;
eine Erzeugungseinheit (302), die konfiguriert ist zum: Erfassen einer Fahrzeugtrajektorie des Fahrzeugs in der Zielumgebung und Informationen des drahtlosen Signals in der Zielumgebung als Reaktion darauf, dass das Fahrzeug in die Zielumgebung eintritt, und Erzeugen zweiter Positionierungsinformationen des Fahrzeugs gemäß der Fahrzeugtrajektorie und der Informationen des drahtlosen Signals, wobei die Fahrzeugtrajektorie Koordinatenwerte des Fahrzeugs in der Zielumgebung trägt, und die Informationen des drahtlosen Signals mindestens eine Adresse einer Quelle des drahtlosen Signals und eine Signalstärke der Quelle des drahtlosen Signals umfassen; und
eine Übertragungseinheit (303), die konfiguriert ist zum: Zuordnen der ersten Positionierungsinformationen zu den zweiten Positionierungsinformationen gemäß den Koordinatenwerten des Fahrzeugs außerhalb der Zielumgebung und den Koordinatenwerten des Fahrzeugs in der Zielumgebung, um Standortfingerabdruckinformationen zu erzeugen, und Übertragen der Standortfingerabdruckinformationen an eine Servervorrichtung, um die Servervorrichtung auszulösen, um die Standortfingerabdruckinformationen in einer Standortfingerabdruckdatenbank zu speichern, die der Zielumgebung entspricht, wobei die Standortfingerabdruckdatenbank für eine Endgerätevorrichtung bereitgestellt wird, um eine Positionierung in einem globalen Koordinatensystem als Reaktion auf das Eintreten in die Zielumgebung von außerhalb der Zielumgebung zu erreichen, **dadurch gekennzeichnet, dass**,
die Erzeugungseinheit ferner konfiguriert ist zum:
Erfassen, als Reaktion darauf, dass das Fahrzeug in die Zielumgebung eintritt, der Fahrzeugtrajektorie des Fahrzeugs in der Zielumgebung durch einen Kilometerzähler des Fahrzeugs und einer interialen Messeinheit (IME) des Fahrzeugs;
Sammeln der Informationen des drahtlosen Signals in der Zielumgebung; und
Durchführen der Segmentierungsverarbeitung an der Fahrzeugtrajektorie gemäß einem voreingestellten Abstand, um eine Vielzahl von ersten Fahrzeugteiltrajektorien zu erhalten und die Vielzahl von ersten Fahrzeugteiltrajektorien zuzuordnen, wobei die Informationen des drahtlosen Signals auf der Vielzahl von ersten Fahrzeugteiltrajektorien gesammelt werden, um die zweiten Positionierungsinformationen des Fahrzeugs zu erzeugen.

9. Fahrzeug, umfassend den fahrzeugmontierten Anschluss nach Anspruch 8.

## Revendications

1. Procédé de création d'informations de positionnement, comprenant:
l'acquisition (101) de premières informations de positionnement d'un véhicule à l'extérieur d'un environnement cible, les premières informations de positionnement comprenant au moins des valeurs de coordonnées du véhicule à l'extérieur de l'environnement cible, et l'environnement cible étant un environnement dans lequel une force de signal de positionnement est plus petite qu'un seuil prédéfini;
l'acquisition (102) d'une trajectoire de véhicule du véhicule dans l'environnement cible et d'informations de signal sans fil dans l'environnement cible en réponse au véhicule entrant dans l'environnement cible, et la génération de secondes informations de positionnement du véhicule selon la trajectoire de véhicule et les informations de signal sans fil, dans lequel la trajectoire de véhicule porte des valeurs de coordonnées du véhicule dans l'environnement cible, et les informations de signal sans fil comprennent au moins une adresse d'une source de signal sans fil et une force de signal de la source de signal sans fil; et l'association (103) des premières informations de positionnement aux secondes informations de positionnement selon les valeurs de coordonnées du véhicule à l'extérieur de l'environnement cible et les valeurs de coordonnées du véhicule dans l'environnement cible pour générer des informations d'empreinte de localisation, et la transmission des informations d'empreinte de localisation à un dispositif serveur pour déclencher le dispositif serveur pour stocker les informations d'empreinte de localisation dans une base de données d'empreintes de localisation correspondant à l'environnement cible, la base de données d'empreintes de localisation étant fournie pour permettre à un dispositif terminal d'obtenir un positionnement dans un système de coordonnées global en réponse à l'entrée dans l'environnement cible depuis l'extérieur de l'environnement cible, **caractérisé en ce que**,
ladite acquisition (102) de la trajectoire de véhicule du véhicule dans l'environnement cible et des informations de signal sans fil dans l'environnement cible en réponse au véhicule entrant dans l'environnement cible et ladite génération des secondes informations de positionnement du véhicule selon la trajectoire de véhicule et les informations de signal sans fil comprennent:
l'acquisition, en réponse au véhicule entrant dans l'environnement cible, de la trajectoire de véhicule du véhicule dans l'environnement cible par l'intermédiaire d'un odomètre du véhicule et d'une unité de mesure inertielle (IMU) du véhicule;
la collecte des informations de signal sans fil dans l'environnement cible; et
la mise en oeuvre d'un traitement de segmentation sur la trajectoire de véhicule selon une distance prédéfinie pour obtenir une pluralité de premières sous-trajectoires de véhicule, et l'association de la pluralité de premières sous-trajectoires de véhicule aux informations de signal sans fil collectées sur la pluralité de premières sous-trajectoires de véhicule pour générer les secondes informations de positionnement du véhicule.

2. Procédé selon la revendication 1, comprenant en outre:
la mise en oeuvre d'un étalonnage d'erreur sur l'IMU lorsqu'il est détecté que le véhicule est stationnaire, pour corriger une erreur de dérive de l'IMU, avant que le véhicule n'entre dans l'environnement cible.

3. Procédé selon la revendication 2, dans lequel ladite association (103) des premières informations de positionnement aux secondes informations de positionnement selon les valeurs de coordonnées du véhicule à l'extérieur de l'environnement cible et les valeurs de coordonnées du véhicule dans l'environnement cible pour générer des informations d'empreinte de localisation comprend:
l'acquisition de premières valeurs de coordonnées cibles parmi les valeurs de coordonnées du véhicule à l'extérieur de l'environnement cible, les premières valeurs de coordonnées cibles étant les dernières valeurs de coordonnées obtenues avant que le véhicule n'entre dans l'environnement cible;
l'acquisition de secondes valeurs de coordonnées cibles parmi les valeurs de coordonnées du véhicule dans l'environnement cible, les secondes valeurs de coordonnées cibles étant les premières valeurs de coordonnée obtenues après que le véhicule est entré dans l'environnement cible; et
l'ajustement des premières valeurs de coordonnées cibles et des secondes valeurs de coordonnées cibles pour associer les premières informations de positionnement aux secondes informations de positionnement pour générer les informations d'empreinte de localisation.

4. Procédé de création d'informations de positionnement, comprenant:
l'acquisition (201) d'informations d'empreinte de localisation transmises par un terminal monté sur véhicule, et la génération des informations d'empreinte de localisation par: le terminal monté sur véhicule acquérant des premières informations de positionnement d'un véhicule à l'extérieur d'un environnement cible, les premières informations de positionnement comprenant au moins des valeurs de coordonnées du véhicule à l'extérieur de l'environnement cible, et l'environnement cible étant un environnement dans lequel une force de signal de positionnement est plus petite qu'un seuil prédéfini; et en réponse au véhicule entrant dans l'environnement cible, le terminal monté sur véhicule acquérant une trajectoire de véhicule du véhicule dans l'environnement cible et des informations de signal sans fil dans l'environnement cible, et générant des secondes informations de positionnement du véhicule selon la trajectoire de véhicule et les informations de signal sans fil, la trajectoire de véhicule portant des valeurs de coordonnées du véhicule dans l'environnement cible, et les informations de signal sans fil comprenant au moins une adresse d'une source de signal sans fil et une force de signal de la source de signal sans fil; et le terminal monté sur véhicule associant les premières informations de positionnement aux secondes informations de positionnement selon les valeurs de coordonnées du véhicule à l'extérieur de l'environnement cible et les valeurs de coordonnées du véhicule dans l'environnement cible pour générer les informations d'empreinte de localisation; et
le stockage (202) des informations d'empreinte de localisation dans une base de données d'empreintes de localisation correspondant à l'environnement cible, la base de données d'empreintes de localisation étant fournie pour permettre au dispositif terminal d'obtenir un positionnement dans un système de coordonnées global en réponse à l'entrée dans l'environnement cible depuis l'extérieur de l'environnement cible, **caractérisé en ce que**, le terminal monté sur véhicule acquérant la trajectoire de véhicule du véhicule dans
l'environnement cible et les informations de signal sans fil dans l'environnement cible, et générant les secondes informations de positionnement du véhicule selon la trajectoire de véhicule et les informations de signal sans fil comprend:
le terminal monté sur véhicule acquérant, en réponse au véhicule entrant dans l'environnement cible, la trajectoire de véhicule du véhicule dans l'environnement cible par l'intermédiaire d'un odomètre du véhicule et d'une unité de mesure inertielle (IMU) du véhicule;
le terminal monté sur véhicule collectant les informations de signal sans fil dans l'environnement cible; et
le terminal monté sur véhicule mettant en oeuvre un traitement de segmentation sur la trajectoire de véhicule selon une distance prédéfinie pour obtenir une pluralité de premières sous-trajectoires de véhicule, et associant la pluralité de premières sous-trajectoires de véhicule aux informations de signal sans fil collectées sur la pluralité de premières sous-trajectoires de véhicule pour générer les secondes informations de positionnement du véhicule.

5. Procédé selon la revendication 4, dans lequel ledit stockage (202) des informations d'empreinte de localisation dans la base de données d'empreintes de localisation correspondant à l'environnement cible comprend:
le fait de déterminer si l'environnement cible est un environnement non familier;
lorsque l'environnement cible n'est pas l'environnement non familier, le fait de détecter si des informations d'empreinte de localisation à fusionner concordant avec les informations d'empreinte de localisation existent dans la base de données d'empreintes de localisation;
et
lorsque les informations d'empreinte de localisation à fusionner concordant avec les informations d'empreinte de localisation existent dans la base de données d'empreintes de localisation, la mise en oeuvre d'un premier traitement de fusion sur les informations d'empreinte de localisation et les informations d'empreinte de localisation à fusionner;
lorsque les informations d'empreinte de localisation à fusionner n'existent pas, le stockage des informations d'empreinte de localisation dans la base de données d'empreintes de localisation.

6. Procédé selon la revendication 5, comprenant en outre:
lorsque l'environnement cible est l'environnement non familier, la création d'une nouvelle base de données d'empreintes de localisation dans un dispositif serveur, et le stockage des informations d'empreinte de localisation dans la nouvelle base de données d'empreintes de localisation.

7. Procédé selon la revendication 5 ou 6, dans lequel ladite mise en oeuvre du premier traitement de fusion sur les informations d'empreinte de localisation et les informations d'empreinte de localisation à fusionner lorsque les informations d'empreinte de localisation à fusionner concordant avec les informations d'empreinte de localisation existent dans la base de données d'empreintes de localisation comprend:
lorsque les informations d'empreinte de localisation à fusionner concordant avec les informations d'empreinte de localisation existent dans la base de données d'empreintes de localisation, le fait de déterminer s'il y a un premier segment d'empreinte cible dans des premiers segments d'empreinte qui est incapable de concorder avec l'un quelconque parmi des seconds segments d'empreinte,
dans lequel les premiers segments d'empreinte comprennent une première sous-trajectoire de véhicule et des informations de signal sans fil correspondant à la première sous-trajectoire de véhicule; la première sous-trajectoire de véhicule est obtenue en mettant en oeuvre un traitement de segmentation sur la trajectoire de véhicule contenue dans les informations d'empreinte de localisation selon une distance prédéfinie; les seconds segments d'empreinte comprennent une seconde sous-trajectoire de véhicule et des informations de signal sans fil correspondant à la seconde sous-trajectoire de véhicule; et la seconde sous-trajectoire de véhicule est obtenue en mettant en oeuvre un traitement de segmentation sur la trajectoire de véhicule contenue dans les informations d'empreinte de localisation à fusionner selon la distance prédéfinie,
lorsqu'il n'y a aucun premier segment d'empreinte cible dans les premiers segments d'empreinte qui est incapable de concorder avec l'un quelconque des seconds segments d'empreinte, la mise en oeuvre d'un moyennage pondéré sur la première sous-trajectoire de véhicule et une sous-trajectoire de véhicule cible pour obtenir une première sous-trajectoire de véhicule fusionnée; la mise en oeuvre d'un moyennage pondéré sur des premières informations de signal sans fil et des secondes informations de signal sans fil pour obtenir des premières informations de signal sans fil fusionnées correspondant à la première sous-trajectoire de véhicule fusionnée; l'augmentation d'une valeur de comptage d'un degré de maturité du second segment d'empreinte, où la sous-trajectoire de véhicule cible est localisée, d'une valeur prédéfinie pour obtenir un premier degré de maturité fusionné; et la fusion des informations d'empreinte de localisation et des informations d'empreinte de localisation à fusionner selon la première sous-trajectoire de véhicule fusionnée, les premières informations de signal sans fil fusionnées et le premier degré de maturité fusionné,
dans lequel la sous-trajectoire de véhicule cible est la seconde sous-trajectoire de véhicule qui concorde avec la première sous-trajectoire de véhicule; les premières informations de signal sans fil sont les informations de signal sans fil correspondant à la première sous-trajectoire de véhicule, et les secondes informations de signal sans fil sont des informations de signal sans fil correspondant à la sous-trajectoire de véhicule cible;
lorsqu'il y a un premier segment d'empreinte cible dans des premiers segments d'empreinte qui est incapable de concorder avec l'un quelconque des seconds segments d'empreinte, l'ajout du premier segment d'empreinte cible aux informations d'empreinte de localisation à fusionner.

8. Terminal monté sur véhicule, comprenant:
une première unité d'acquisition (301) configurée pour acquérir des premières informations de positionnement d'un véhicule à l'extérieur d'un environnement cible, les premières informations de positionnement comprenant au moins des valeurs de coordonnées du véhicule à l'extérieur de l'environnement cible, et l'environnement cible étant un environnement dans lequel une force de signal de positionnement est plus petite qu'un seuil prédéfini;
une unité de génération (302) configurée pour: acquérir une trajectoire de véhicule du véhicule dans l'environnement cible et des informations de signal sans fil dans l'environnement cible en réponse au véhicule entrant dans l'environnement cible, et générer des secondes informations de positionnement du véhicule selon la trajectoire de véhicule et les informations de signal sans fil, dans lequel la trajectoire de véhicule porte des valeurs de coordonnées du véhicule dans l'environnement cible, et les informations de signal sans fil comprennent au moins une adresse d'une source de signal sans fil et une force de signal de la source de signal sans fil; et
une unité de transmission (303) configurée pour:
associer les premières informations de positionnement aux secondes informations de positionnement selon les valeurs de coordonnées du véhicule à l'extérieur de l'environnement cible et les valeurs de coordonnées du véhicule dans l'environnement cible pour générer des informations d'empreinte de localisation, et
transmettre les informations d'empreinte de localisation à un dispositif serveur pour déclencher le dispositif serveur pour stocker les informations d'empreinte de localisation dans une base de données d'empreintes de localisation correspondant à l'environnement cible, la base de données d'empreintes de localisation étant fournie pour permettre à un dispositif terminal d'obtenir un positionnement dans un système de coordonnées global en réponse à l'entrée dans l'environnement cible depuis l'extérieur de l'environnement cible, **caractérisé en ce que**,
l'unité de génération est configurée en outre pour:
acquérir, en réponse au véhicule entrant dans l'environnement cible, la trajectoire de véhicule du véhicule dans l'environnement cible par l'intermédiaire d'un odomètre du véhicule et d'une unité de mesure inertielle (IMU) du véhicule;
collecter les informations de signal sans fil dans l'environnement cible; et
mettre en oeuvre un traitement de segmentation sur la trajectoire de véhicule selon une distance prédéfinie pour obtenir une pluralité de premières sous-trajectoires de véhicule, et associer la pluralité de premières sous-trajectoires de véhicule aux informations de signal sans fil collectées sur la pluralité de premières sous-trajectoires de véhicule pour générer les secondes informations de positionnement du véhicule.

9. Véhicule, comprenant le terminal monté sur véhicule selon la revendication 8.
